# EUROPEAN PATENT SPECIFICATION

(11) **EP 4 417 272 B1**
(45) Date of publication and mention of the grant of the patent: **03.09.2025**
(21) Application number: 24158315.2
(22) Date of filing: 19.02.2024
(51) Int. Cl.: A63B 45/00, B22F 3/11, B29C 64/10, F23R 3/00, A63B 39/00, A63B 39/06, A63B 39/04, A63B 41/08, A63B 41/10, A63B 41/12, A63B 43/00, A63B 71/06, G06F 113/10

(54) **BASKETBALL**
BASKETBALL
BALLON DE BASKET

(30) Priority: 18.02.2023 US 202363446801 P; 06.02.2024 US 202418434727
(43) Date of publication of application: 21.08.2024
(73) Proprietor: Wilson Sporting Goods Co., Chicago, IL 60601 (US)
(72) Inventor: LIPPA, Nadine, Arlington Heights, 60005 (US); VANTREASE, Hudson R., Chicago, 60647 (US); KRYSIAK, Kevin L., Palatine, 60067 (US); VOGEL, David A., Island Lake, 60042 (US); TRIFALE, Ninad, Chicago, 60605 (US)
(74) Representative: Marks & Clerk LLP

(56) References cited:
- EP-A1- 3 995 237
- EP-A2- 3 097 958
- DE-A1- 102020 125 777
- US-A- 5 865 697
- US-A1- 2020 215 395

## Description

### FIELD

The present disclosure relates to a basketball and method of manufacturing a basketball.

### BACKGROUND

Basketball is a popular support worldwide. Basketballs are typically formed by an inflatable bladder wrapped in layers of fibers and overlaid with leather or rubber composite panels. Some basketballs are formed by a molded rubber sphere.

EP3097958 A2 discloses a sports ball comprises a surface layer comprising a plurality of panels. The sports ball further comprises a lattice structure extending below the surface layer, wherein the lattice structure comprises a plurality of lattice cells comprising radially extending elements. The lattice cells which are adjacent to the surface layer have at least one dimension which is smaller than an average diameter of the panels.

### SUMMARY

An aspect of the present disclosure relates to a basketball comprising:
a single integrally formed unitary body comprising:
first layer comprising an inner lattice;
second layer comprising an outer lattice and surface strips; and
radial beams interconnecting the first layer and the second layer.

The outer lattice may be lobular with a plurality of lobes joined along the surface strips.

The radial beams comprise a first number of the radial beams interconnecting the first layer and the second layer beneath the surface strips. The radial beams comprise a second number of the radial beams interconnecting the first layer and the second layer circumferentially between the surface strips. Each of the first number of radial beams have a first height. Each of the second number of radial beams have a second height. The second height is greater than the first height.

Each of the first number of radial beams may have a first thickness. Each of the second number of radial beams may have a second thickness. The second thickness may be less than the first thickness.

The radial beams may comprise a third number of the radial beams interconnecting the first layer and the second layer in circumferential regions between the surface strip. Each of the third number of radial beams may have the second height and a third thickness. The third thickness may be greater than the second thickness.

The radial beams may comprise a first number of the radial beams interconnecting the first layer and the second layer inward of the surface strips. The radial beams may comprise a second number of the radial beams interconnecting the first layer and the second layer circumferentially between the surface strips. Each of the first number of radial beams may have a first thickness. Each of the second number of radial beams may have a second thickness. The second thickness may be less than the first thickness.

The inner lattice may be spherical and non-lobular. The inner lattice may be lobular.

The outer lattice may comprise outer lattice beams having flat outer surfaces.

The radial beams may have a uniform thickness between the inner lattice and the outer lattice.

The inner lattice and the outer lattice may each comprise a two-dimensional hexagonal lattice.

The inner lattice and the outer lattice may comprise cells having a center-to-center distance of at least 5 mm and no greater than 12 mm.

The inner lattice may comprise inner lattice beams having a thickness of at least 1 mm and no greater than 5 mm. The outer lattice may comprise outer lattice beams having a thickness of at least 0.8 mm and no greater than 3.5 mm.

The single integrally formed unitary body may be formed from a material having one of more material properties, measured as injection molded, of, for example:
a density of at least 0.9 g/cm³ and no greater than 1.2 g/cm³;
a shore A durometer of at least 80 and no greater than 92;
a flexural modulus of at least 80;
a tensile modulus of at least 50;
elongation percentage of at least 150%; and/or
a rebound resilience of at least 50% as measured pursuant to ASTM D7121/DIN 53512 DIN 53516.

The basketball may further comprise an outer skin over an outer surface of the outer lattice. The outer skin may be imperforate. The skin may be transparent or translucent.

The basketball may further comprise an inner skin formed on an inner surface of one of the inner lattice and the outer lattice.

The outer lattice may comprise an outer textured surface.

The basketball may have a circumference of at least 742 mm and no greater than 759 mm. The basketball may have a mass of at least 567 g and no greater than 628 g. The basketball may have a rebound of at least 1320.8 mm (52 inches) and no greater than 1346.2 mm (53 inches).

An aspect of the present disclosure relates to a computer program comprising computer executable instructions that, when executed by a processor, cause the processor to control an additive manufacturing apparatus to manufacture a basketball in accordance with any aspect or definition disclosed herein.

An aspect of the present disclosure relates to a computer-readable medium storing data which defines both a digital representation of a basketball in accordance with any aspect or definition disclosed herein and operating instructions adapted to control an additive manufacturing device to fabricate the basketball using the digital representation of the basketball when said data is relayed to the additive manufacturing device.

An aspect of the present disclosure relates to a method of manufacturing a basketball in accordance with any aspect or definition disclosed herein.

The method may comprise manufacturing at least part of the basketball via additive manufacturing or 3D printing.

The method may comprise obtaining an electronic file representing a geometry of the basketball. The method may comprise controlling an additive manufacturing apparatus to manufacture, over one or more additive manufacturing steps, at least a portion of the basketball according to the geometry specified in the electronic file.

The method may comprise manufacturing a complete basketball via additive manufacturing. In some examples the method may comprise performing subsequent manufacturing steps following an additive manufacture process.

As used herein, "additive manufacturing" refers generally to manufacturing processes wherein successive layers of material(s) are provided on each other to "build-up" layer-by-layer or "additively fabricate", a three-dimensional component. The successive layers generally fuse together to form a monolithic component which may have a variety of integral sub-components.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Electron Beam Additive Manufacturing (EBAM), Laser Net Shape Manufacturing (LNSM), Direct Metal Deposition (DMD), Digital Light Processing (DLP), Continuous Digital Light Processing (CDLP), Direct Selective Laser Melting (DSLM), Selective Laser Melting (SLM), Direct Metal Laser Melting (DMLM), Direct Metal Laser Sintering (DMLS), Material Jetting (MJ), NanoParticle Jetting (NPJ), Drop On Demand (DOD), Binder Jetting (BJ), Multi Jet Fusion (MJF), Laminated Object Manufacturing (LOM) and other known processes.

Additive manufacturing processes typically fabricate components based on three-dimensional (3D) information, for example a three-dimensional computer model (or design file), of the component.

Accordingly, examples described herein not only include a basketball as described herein, but also methods of manufacturing such a basketball or components thereof via additive manufacturing and computer software, firmware or hardware for controlling the manufacture of such a basketball via additive manufacturing.

The entire structure, or the structure of one or more parts, of the basketball may be represented digitally in the form of a design file. A design file, or computer aided design (CAD) file, is a configuration file that encodes one or more of the surface or volumetric configuration of the shape of the basketball. That is, a design file represents the geometrical arrangement or shape of the product, which in this disclosure is a basketball.

Design files can take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer.

Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist.

Design files can be produced using modelling (e.g. CAD modelling) software and/or through scanning the surface of a product to measure the surface configuration of the product.

Once obtained, a design file may be converted into a set of computer executable instructions that, once executed by a processer, cause the processor to control an additive manufacturing apparatus to produce a product (a basketball or part of a basketball in the present disclosure) according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. As discussed above, the formation may be through deposition, through sintering, or through any other form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product (a basketball or part of a basketball in accordance with the present disclosure) to be produced. As noted, the code or computer readable instructions defining the product can be used to physically generate the object, upon execution of the code or instructions by an additive manufacturing system. For example, the instructions may include a precisely defined 3D model of the product and can be generated from any of a large variety of well-known computer aided design (CAD) software systems such as AutoCAD^{®}, TurboCAD^{®}, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus can be instructed to print out the basketball or part of the basketball.

In light of the above, embodiments include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product. In these embodiments, the design file itself can automatically cause the production of the product once input into the additive manufacturing device. Accordingly, in this embodiment, the design file itself may be considered computer executable instructions that cause the additive manufacturing apparatus to manufacture the product. Alternatively, the design file may be converted into instructions by an external computing system, with the resulting computer executable instructions being provided to the additive manufacturing device.

Given the above, the design and manufacture of implementations of the subject matter and the operations described in this specification can be realized using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively, or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

### BRIEF DESCRIPTION OF THE DRAWINGS

Figure 1 is a perspective view of an example basketball.
Figure 2 is an end view of the example basketball of Figure 1.
Figure 3 is a side view of the example basketball of Figure 1.
Figure 4 is a sectional view of the example basketball of Figure 3 taken along line 4-4.
Figure 5 is a sectional view of the example basketball of Figure 2 taken along line 5-5.
Figure 6 is an enlarged perspective view of a portion of the example basketball of Figure 5.
Figure 7 is an enlarged perspective view of a portion of the example basketball of Figure 2.
Figure 8 is a fragmentary sectional view of the example basketball of Figure 1, wherein portions of a wall of the basketball are omitted to illustrate an inner surface of an outer layer of the basketball.
Figure 9 is an enlarged sectional view of a portion of the example basketball of Figure 1.
Figure 10 is an enlarged perspective view of a portion of the example basketball of Figure 1.
Figure 11 is an enlarged view of a portion of the example basketball of Figure 10.
Figure 12 is an enlarged sectional view of a portion of the basketball of Figure 1.
Figure 13 is an enlarged sectional view of a portion of the basketball of Figure 1.
Figure 14 is an enlarged perspective view of a portion of the basketball of Figure 1.
Figure 15 is an enlarged sectional view of a portion of the basketball of Figure 1, illustrating an outer wall having a loby-flat construction having an inner layer and an outer layer joined by radial beams.
Figure 16 is an enlarged sectional view of a portion of the basketball of Figure 1 with a different inner layer to provide the outer wall with a loby-loby construction.
Figure 17 is an enlarged sectional view of a portion of the basketball of Figure 1 with a different inner layer and a different outer layer provide the outer all with a flat-flat construction.
Figure 18A is an enlarged perspective view of a portion of the basketball of Figure 1.
Figure 18B is a sectional view illustrating the example outer circumferential beams of an outer lattice of an outer layer of the outer wall of the basketball of Figure 1.
Figure 19 is an enlarged perspective view of a portion of a basketball having outer circumferential beams of an outer lattice of an outer layer of an outer wall, wherein the outer circumferential beams have outer rounded surfaces.
Figure 20 is a perspective view of a portion of an example basketball having an outer lattice that is textured.
Figure 21 is a perspective view of a portion of example basketball having surface strips that are textured.
Figure 22 is a top view of the front from a pole and) of the example basketball of Figure 1 without an outer layer to illustrate a varying thickness of radial beams about the basketball, wherein the varying thicknesses are indicated by a heat map of the thicknesses.
Figure 23 is an enlarged perspective of the example basketball of Figure 22.
Figure 24 is a side view of the first side of the example basketball of Figure 22.
Figure 25 is a side view of a second opposite side of the example basketball of Figure 22.
Figure 26 is a perspective view of an example basketball omitting an inner layer and an outer layer of an outer wall, wherein radial beams having varying thicknesses are illustrated with an associated heat map indicating the varying thicknesses of the radial beams.
Figure 27 is an enlarged perspective view illustrating portions of an example basketball without an outer layer of the outer wall to illustrate example radial beams extending from an example inner layer of the outer wall.
Figure 28 is an enlarged perspective view illustrating portions of an example basketball without an outer layer of the outer wall illustrate example radial beams extending from an example inner layer of the outer wall.
Figure 29 is a top view (taken from a pole and) of an example basketball omitting an outer layer and portions of an inner layer of the outer wall, while illustrating an example inner skeleton and an example distribution of radial beams, wherein varying thicknesses of the radial beams are indicated by a heat map.
Figure 30 is a perspective view illustrating the example basketball of 1 having a first information landing.
Figure 31 is an enlarged perspective view of a portion of the example basketball of Figure 30.
Figure 32 is an enlarged perspective view of a portion of the basketball of Figure 30 having an example second information landing.
Figure 33 is an enlarged perspective view of a portion of the example basketball of Figure 32 illustrating the example second information landing.
Figure 34 is a perspective view of the example basketball of Figure 30 having an example third information landing.
Figure 35 is an enlarged perspective view of a portion of the basketball of Figure 34 illustrating the example third information landing.
Figure 36 is a perspective view of the example basketball of Figure 30 having an example a fourth information landing.
Figure 37 is an enlarged perspective view of a portion of the basketball of Figure 36 illustrating the example fourth information landing.
Figure 38 is an enlarged perspective view of portions of the example basketball of Figure 1 having an example information incorporated into and outer lattice of the example basketball.
Figure 39 is a perspective view illustrating portions of the example basketball of Figure 1 having an example information coating.
Figure 40 is a perspective view illustrating an example method for printing the example basketball of Figure 1.
Figure 41 is a sectional view schematically illustrating the example basketball formed by the example basketball of Figure 1 having an example outer skin.
Figure 42 is a sectional view illustrating portions of the example basketball of Figure 41 with the example outer skin.
Figure 43 is a sectional view illustrating portions of the example basketball of Figure 41 with an alternative outer skin.
Figure 44 is a sectional view illustrating portions of the example basketball of Figure 41 with an alternative outer skin.
Figure 45 is a sectional view illustrating portions of an example basketball formed by the example basketball of Figure 1 and provided with an example inner skin.
Figure 46 is a sectional view of a portion of the example basketball of Figure 45 with the example inner skin.
Figure 47 is a sectional view of a portion of the example basketball of Figure 45 with an alternative inner skin.
Figure 48 is a sectional view schematically illustrating portions of an example basketball formed by the example basketball of Figure 1 and provided with an example middle skin.
Figure 49 is a sectional view of a portion of the example basketball of Figure 48 with the example middle skin.
Figure 50 is a sectional view of a portion of the example basketball of Figure 48 with an alternative middle skin.
Figure 51 is a sectional view schematically illustrating portions of an example basketball formed by the example basketball of Figure 1 and provided with the outer skin of Figure 42 and the inner skin of Figure 46.
Figure 52 is a sectional view of the example basketball taken along line 51 - 51 of Figure 51.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

Disclosed are example basketballs formed by additive or 3D printing. The example 3D printed basketballs are formed from materials and have features that provide the basketballs with the outer surface strips that basketball players are accustomed to when handling and gripping the basketball. At the same time, the 3D printed basketballs have a size, weight, and rebound consistency similar to that of standard or conventional competitive play basketballs currently sanctioned by various organizations such as the National Basketball Association (NBA), National Collegiate Athletic Association (NCAA), National Federation of High Schools (NFHS) and other organizations. In contrast to such standard or conventional competitive play basketballs, the disclosed 3D printing basketballs offer a unique aesthetic.

In some implementations, the example 3D printed basketballs are a single integral one-piece construction. The one-piece construction reduces the number of parts and may simplify assembly. In some implementations, the example 3D printed basketballs may largely comprise a one-piece construction, but wherein an outer, inner or middle skin is provided to reduce airflow resistance when the ball is shot or passed.

In some implementations, the 3D printed basketballs do not require inflation. As result, the task of maintaining the basketball at a proper inflation level or pressure is eliminated. In addition, rebound performance of the 3D printed basketballs may be more consistent over time.

For purposes of this disclosure, the term "coupled" shall mean the joining of two members directly or indirectly to one another. Such joining may be stationary in nature or movable in nature. Such joining may be achieved with the two members, or the two members and any additional intermediate members being integrally formed as a single unitary body with one another or with the two members or the two members and any additional intermediate member being attached to one another. Such joining may be permanent in nature or alternatively may be removable or releasable in nature.

For purposes of this disclosure, the phrase "configured to" denotes an actual state of configuration that fundamentally ties the stated function/use to the physical characteristics of the feature proceeding the phrase "configured to".

For purposes of this disclosure, the term "releasably" or "removably" with respect to an attachment or coupling of two structures means that the two structures may be repeatedly connected and disconnected to and from one another without material damage to either of the two structures or their functioning.

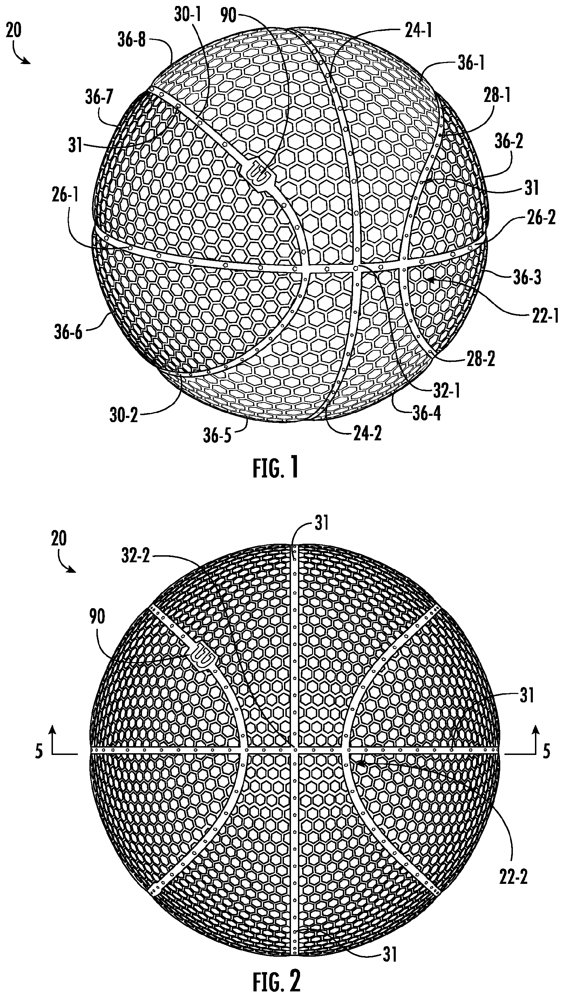

Figures 1-3 illustrate an example basketball 20. In the example illustrated, basketball 20 comprises a single integral or unitary one-piece construction formed by 3D printing an elastomeric polymeric material. Basketball 20 has a general spherical shape comprising a pair of opposite polar regions 22-1, 22-2 with a series of surface strips 24-1, 24-2 (collectively referred to as surface strips 24), 26-1, 26-2 (collectively referred to as surface strips 26), 28-1, 28-2 (collectively referred to as surface strips 28) and 30-1, 30-2 (collectively referred to as surface strips 30). Surface strips 24-1, 24-2 converge at and extend between polar center points 32-1 and 32-2 of basketball 20. Surface strips 24-1, 24-2 are coplanar, extending in a plane that that intersects a center point of basketball 20. Surface strips 26-1, 26-2 converge at and extend between polar center points 32-1 and 32-2. Surface strips 26-1, 26-2 are coplanar, extending in a second plane that is perpendicular to the first plane and that intersects a center point of basketball 20. Surface strips 28-1, 28-2 have endpoints offset from polar center points 32-1 and 32-2 and generally bisect portions of the outer circumference of basketball 20 between surface strips 24-1, 24-2 and surface strips 26-1, 26-2.

In the illustrated examples, each of surface strips 24, 26, 28 and 30 additionally comprises a series of perforations 31 that extend completely through such surface strips. Perforations 31 comprise small openings that facilitate powder removal of cycle time during printing of the basketball 20. In the example illustrated, such perforations 31 may have polygonal shapes. In other implementations, such perforations 31 may have other shapes, such as circular shapes. In some implementations, the perforations may have patterns so as to form a graphic or so as to spell out a logo or name.

Although the example illustrated perforations 31 extending substantially along the entirety of each of surface strips 24, 26, 28 and 30, in other implementations, such perforations 31 may be located at the selected portions of selected surface strips 24, 26, 28 and 30. For example, in some implementations, the provision of such perforations may be limited to those surface strips that extend along the equator and prime meridian of basketball 20. Such perforations may be omitted and landings, such as landing 90, wherein a logo or emblem may be provided. In yet other implementations, the provision of perforations 31 may be at other selected locations. In some implementations, perforations 31 may be omitted.

Surface strips 24, 26, 28 and 30 are integrally formed as part of an outer surface of basketball 20. Each of surface strips 24, 26, 28 and 30 resides in a depressed portion or in a recessed portion of the outer circumferential surface of basketball 20. In the example illustrated, each of surface strips 24, 26, 28 and 30 extends between consecutive circumferential regions that aesthetically appear as panels and that are lobular in shape. For purposes of this disclosure, the term "lobular" and "loby" refer to the surface of a region having a smaller radius of curvature as compared to the overall radius of the basketball. In the example illustrated, basketball 20 comprises eight loby circumferential regions or aesthetic panels 36-1, 36-2, 36-3, 36-4, 36-5, 36-6, 36-7, and 36-8 (collectively referred to as panels 36) that mimic the conventional appearance of a regulation or sanctioned competitive play basketball.

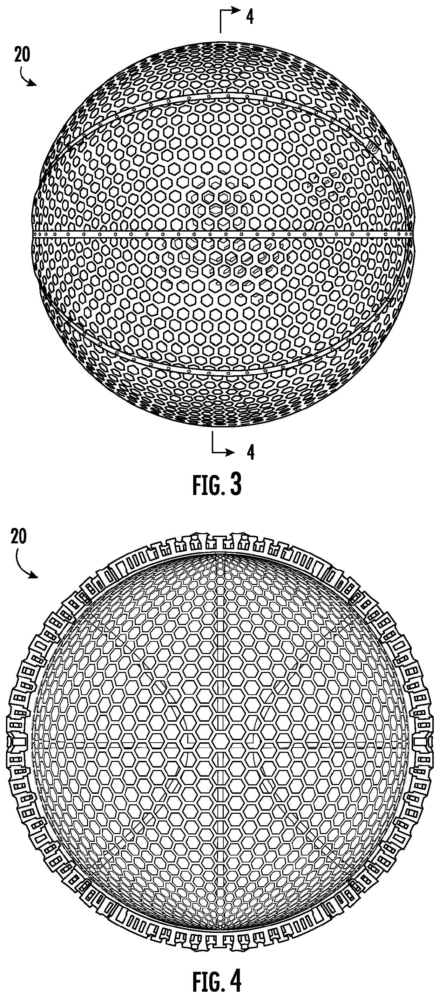

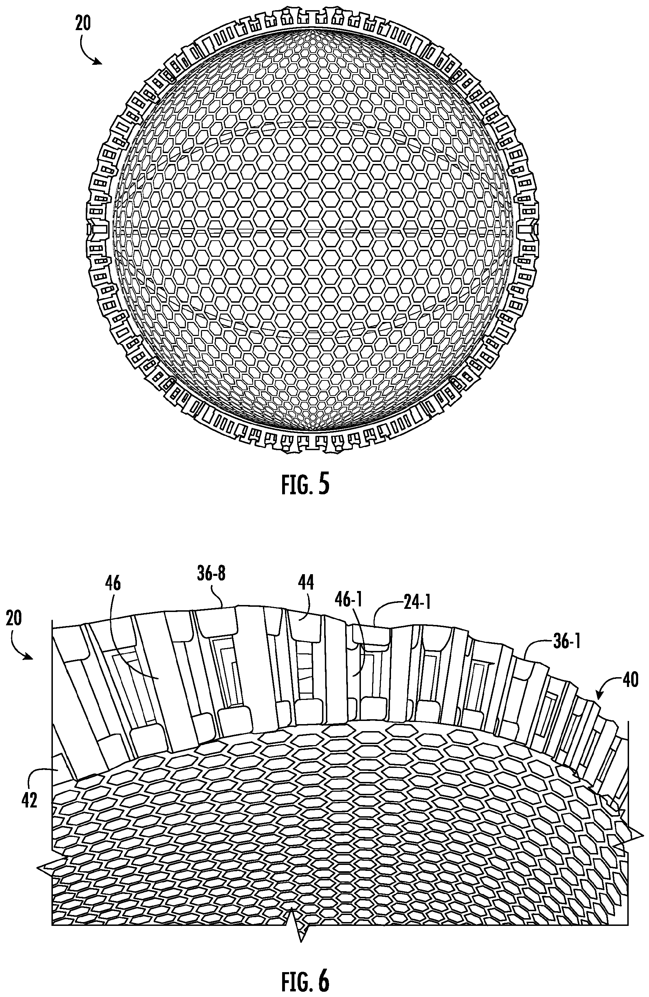

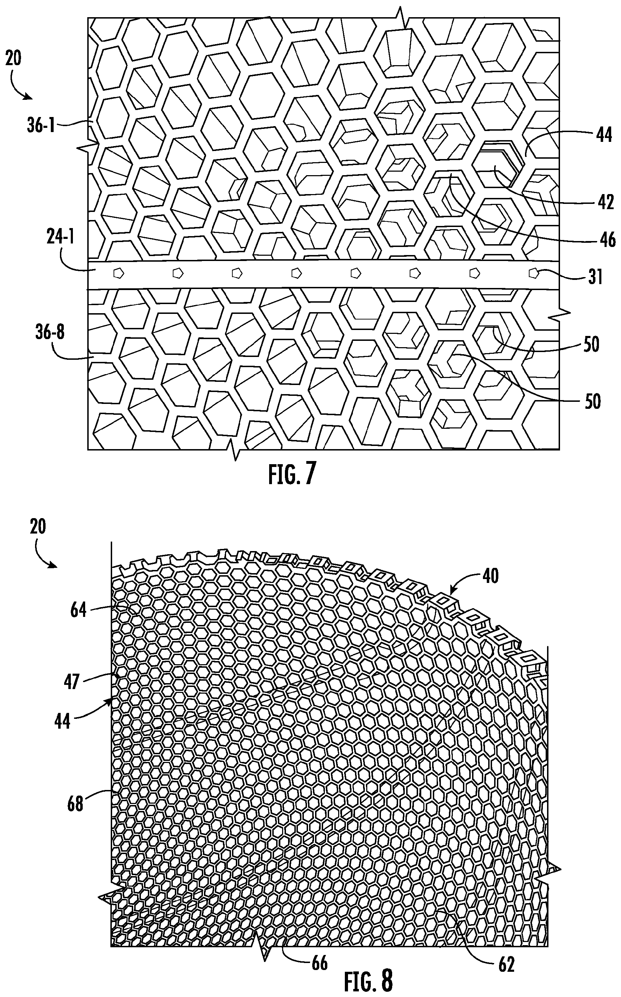

Figures 4 and 5 are sectional views of basketball 20 taken along lines 4 and 5 of Figures 3 and 2, respectively. Figure 6 is an enlarged view of a portion of basketball 21 opposite sides of surface strip 24-1. Figure 7 is an enlarged outer view of a portion of basketball 20 on opposite sides of surface strip 24-1. As shown by Figures 6 and 7, basketball 20 comprise a single integral and continuous outer wall 40 that comprises an inner lattice 42, an outer lattice 44 and radial beams 46.

Figure 8 is a sectional view of basketball 20 from an inside of basketball 20 to illustrate inner lattice 42, wherein a portion 47 of wall 40 is illustrated without the inner lattice 42 and without the radial beams 46 to better illustrate outer lattice 44. Inner lattice 42 forms an inner layer providing an inner surface of wall 40, adjacent to a generally hollow interior of basketball 20.

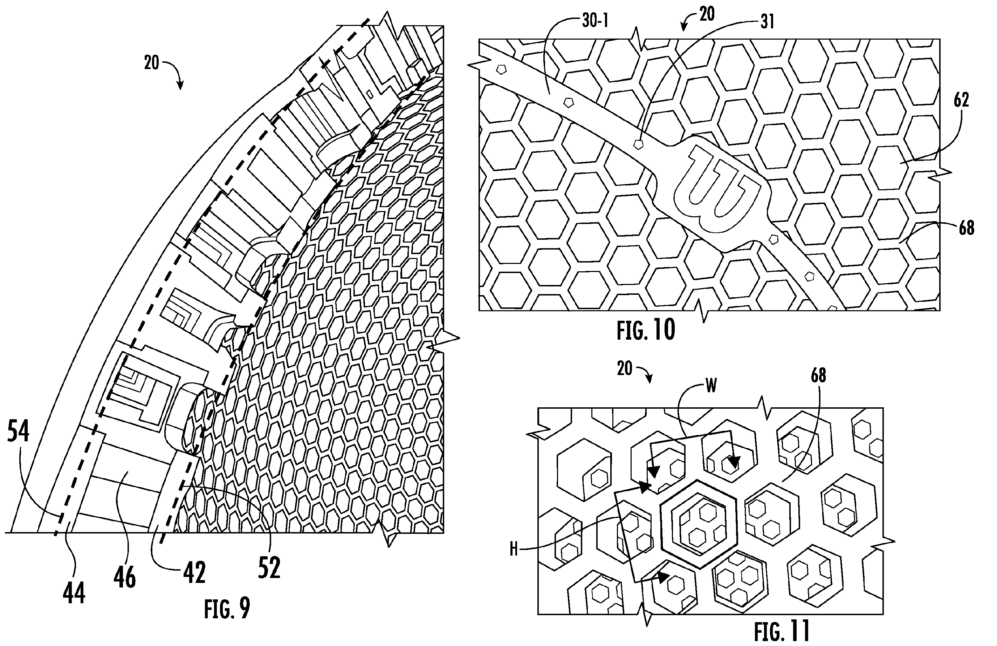

Outer lattice 42 and surface strips 24, 26, 28 and 30 form an outer layer of wall 40, providing an outermost surface of basketball 20. Figure 9 is an enlarged sectional view of basketball 20 illustrating the general profile of the inner layer 52 formed by inner lattice 42 and the general profile of outer layer 54 formed by outer lattice 44. As discussed above, the outer layer 54 is loby between consecutive surface strips. In contrast, inner layer 52 is circumferential, having the same radius as that of basketball 20.

As shown by Figure 8, inner lattice 42 comprises a matrix of interconnected hexagonal cells 62. Outer lattice 44 comprises a matrix of interconnected hexagonal cells 64 extending between surface strips 24, 26, 28 and 30. Figures 10 and 11 illustrate the example hexagonal cells 62 in more detail. In the example illustrated, cells 62 and 60 are identical in shape and size. Each of cells 62 and 64 has a center-to-center distance of at least 5 mm and no greater than 12 mm. Each of cells 62 and 54 has a hole size of at least 1 mm and no greater than 10 mm. The hole size of cells 64 is sufficiently small such that human adult fingers may not get stuck in the outer lattice 44.

In other implementations, cells 62 and 64 may both be the same, but may have different shapes other than hexagonal shapes. For example, cells 62 and 64 may both have a circular shape, a pentagonal shape, and octagonal shape or the like. In other implementations, cells 62 and 64 may have different shapes, wherein cells 62 have a first shape while cells 64 have a second different shape. In some implementations, cells 62 and 60 sizes. For example, cells 62 may be larger than cells 64 or cells 64 may be larger than cells 62.

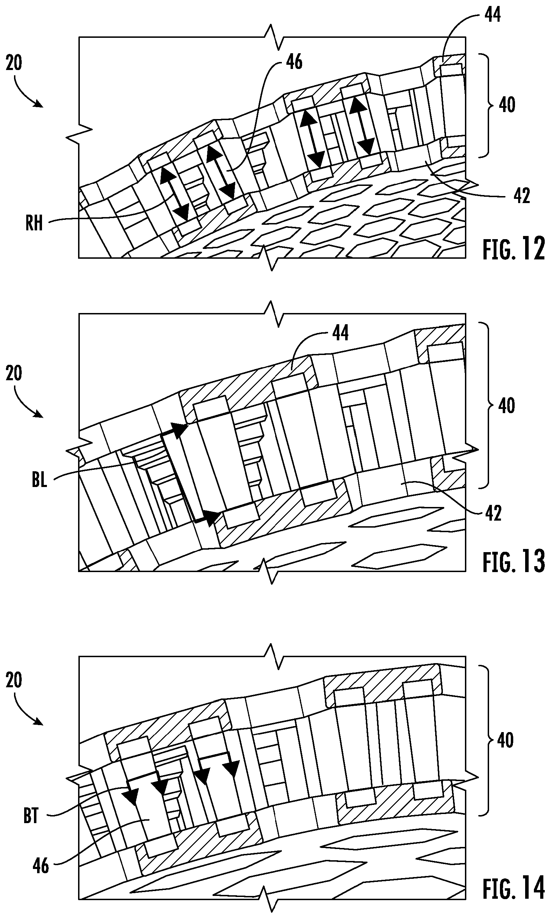

Radial beams 46 extend between and interconnect inner layer 52 and outer layer 54. Radial beams 46 extend between inner lattice 42 and outer lattice 44 of panel 36. Radial beams 46 extend between inner lattice 42 and surface strips 24, 26, 28 and 30 of outer layer 54. As shown by Figure 12, radial beams 46 extend along radial axes that intersect the center point of basketball 20. As further shown by Figure 12, each of radial beams has a particular radial height RH. The radial height refers to the radial distance between a top of the beam 46 and a center point of the basketball 20. The radial heights RHs may vary amongst different radial beams 46. In the example illustrated, those particular beams 46 that underlie surface strips 24, 26, 28 and 30 have a shorter radial height RH as compared to other radial beams 46 that underlie outer lattice 44. Figure 6 illustrates a particular radial beam 46-1 that has a shorter radial height RH as compared to other radial beams 46 that underlie outer lattice 44.

As shown by Figure 13, each of radial beams 46 has a beam length BL. Beam length refers to the radial distance between the top and the bottom of the particular beam 46. Beam length may vary amongst different beams 46. In the example illustrated, those particular beams 46 that underlie surface strips 24, 26, 28 and 30 have a shorter beam length BL as compared to other radial beams 46 that underlie outer lattice 44. Beam 46-1 in Figure 6 has a shorter beam length BL as compared to other radial beams 46 that underlie outer lattice 44. In some implementations, a particular radial beam 46 may have a shorter radial height, but the same beam length as compared to other radial beams, where the inner lattice 42 has a corresponding smaller radius underlying the particular radial beams 46 that has a shorter radial height. Conversely, in some implementations, particular radial beams 46 may have the same radial height but a shorter beam length where the inner lattice 42 has a corresponding greater radius underlying the particular radial beams 46 that has the shorter beam length.

As shown by Figure 14, each of radial beams 46 of basketball 20 has a beam thickness BT. The beam thicknesses (or diameters) of individual beam 46 may vary. In the example illustrated, radial beams have a thickness ranging from 0.8 mm to 3.5 mm. Beam thickness may be uniform for a given beam or may be thicker or wider at the center of the beam to provide more stiffness and prevent buckling.

In the example illustrated, those radial beams 46 that underlie surface strips 24, 26, 28 and 30 have a greater thickness as compared to the thickness of those radial beams 46 that underlie portions of outer lattice 44. Such distributions assist in providing a more consistent bounce or rebound performance along different circumferential portions of basketball 20. As will be described hereafter, in some implementations, the beam thicknesses of those radial beams 46 located along the polar regions may have a lesser thickness as compared to those radial beams 46 located between the polar regions.

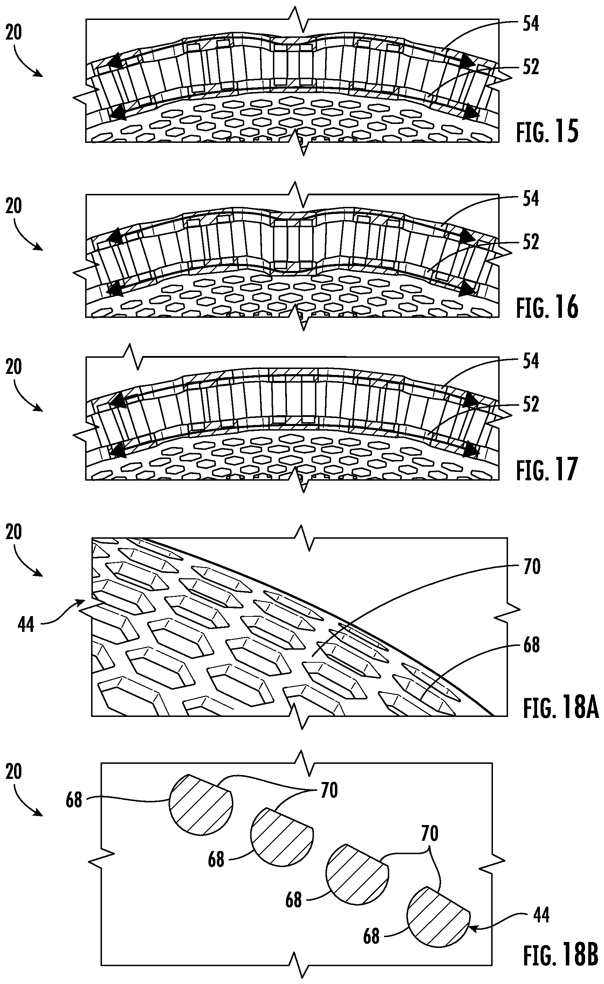

As discussed above, outer layer 54 is lobular in shape. As shown by Figure 15, inner layer 52 is circumferential or "flat", lacking any depressions. As shown by Figure 16, in other implementations, both inner layer 52 and outer layer 54 may be loby, wherein the depressions or recessed portions are circumferentially aligned with one another. In such implementations, the beam length of the radial beams 46 connecting the inner layer 52 and the outer layer 54 would be substantially constant, even in regions where the radial outer surfaces of layers 52 and 54 turn concave. In some implementations, although both layers 52 and 54 are loby, layers 52 and 54 may have different curvature radii. For example, inner layer 52 may have a slight inward depression or curvature between adjacent panels 36 while outer layer 54 has a greater inward depression or curvature between adjacent panels 36.

As shown by Figure 17, in some implementations, both inner layer 52 and outer layer 54 may have generally circumferential or flat profiles, lacking any depression between panels. In such implementations, panel 36 may not be loby, but may have the same radius of curvature as that of basketball 20. In such implementations, the surface strips may have outer circumferential surfaces that are flush or level with the outer circumferential surfaces of outer lattice 44.

Figures 18A and 18B illustrate the outer surface of basketball 20. In the example illustrated, the circumferential beams 66, forming inner lattice 42, have a generally circular or oval cross-sectional shape. In contrast, as shown by Figure 18B, the circumferential beams 68 forming outer lattice 44 have outer portions 70 that are cut or flat. As shown by Figure 18A, this provides a smooth or flat outer surface for panels 36.

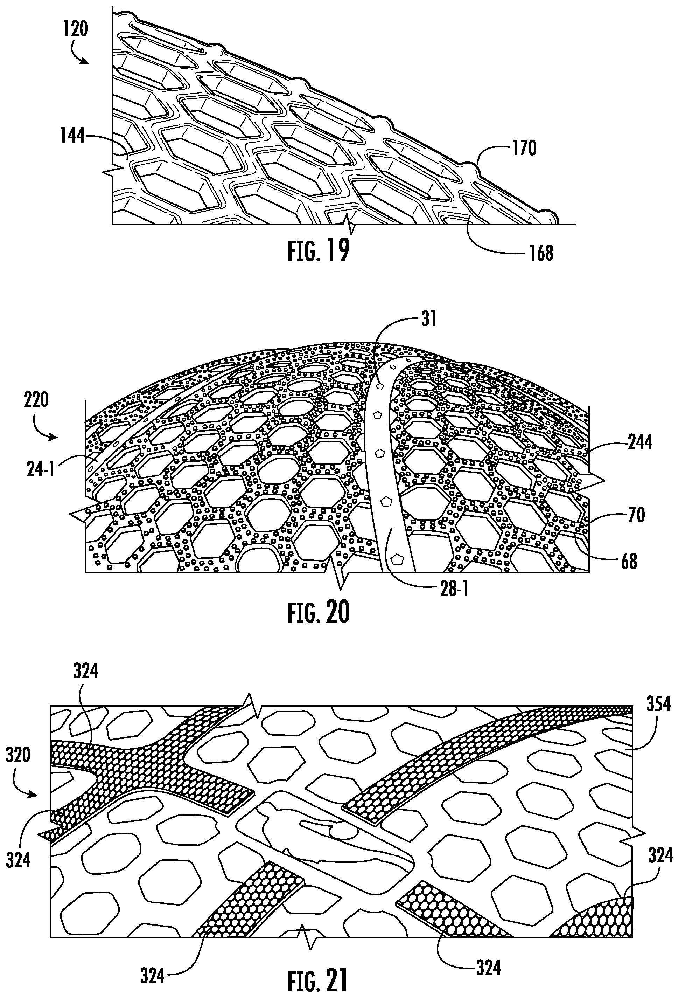

Figure 19 illustrates portions of an alternative outer lattice 144 for an example basketball 120. Basketball 120 is similar to basketball 20 described above except the basketball 120 comprises outer lattice 144. Outer lattice 144 is similar to outer lattice 44 in all respects except that outer lattice 144 comprises circumferential beams 168 which are not flat, but which are rounded. As a result, the tops 170 of beams 168 have a curved or rounded profile to provide a different grip for basketball 120. In some implementations, all of such beams 168 are rounded. In some implementations, selected circumferential beams 168 at selected circumferential portions of basketball 120 are rounded.

Figure 20 illustrates portions of an alternative outer lattice 244 for an example basketball 220. Basketball 220 is similar to basketball 20 described above except the basketball 220 comprises outer lattice 244. Outer lattice 244 is similar to outer lattice 44 in all respects except that the flat upper surfaces 70 of circumferential beams 68 are textured rather than being smooth. In the particular example illustrated, the flat tops 70 of circumferential beams 68 are provided with a pebble-like textured surface to enhance grip. In the example illustrated, surface strips 24, 26, 28 and 30 remain smooth and are not textured. In some implementations, all or some of surface strips 24, 26, 28 and 30 may include the same texture as that of top 70 of circumferential beams 68 or may be provided with a different distinct texture. In some implementations, different portions of each of surface strips 24, 26, 28 and 30 may be differently textured.

Figure 21 illustrates portions of an alternative outer layer 354 of an example basketball 320. Basketball 320 is similar to basketball 20 described above except that basketball 320 comprises outer layer 354. The outer layer 354 is similar to outer layer 54 described above except that outer layer 354 comprises surface strips 324 corresponding to surface strips 24, 26, 28 and 30, but wherein the surface strips have outer surfaces that are textured. In the example illustrated, the outer surfaces of such surface strips 324 are provided with a pebbled or cobblestone texture. In other implementations, the outer surfaces of such surface strips may have other textures. In some implementations, all or some of surface strips 324 may be provided with a different textures. In some implementations, different portions of each of surface strips 324 may be differently textured.

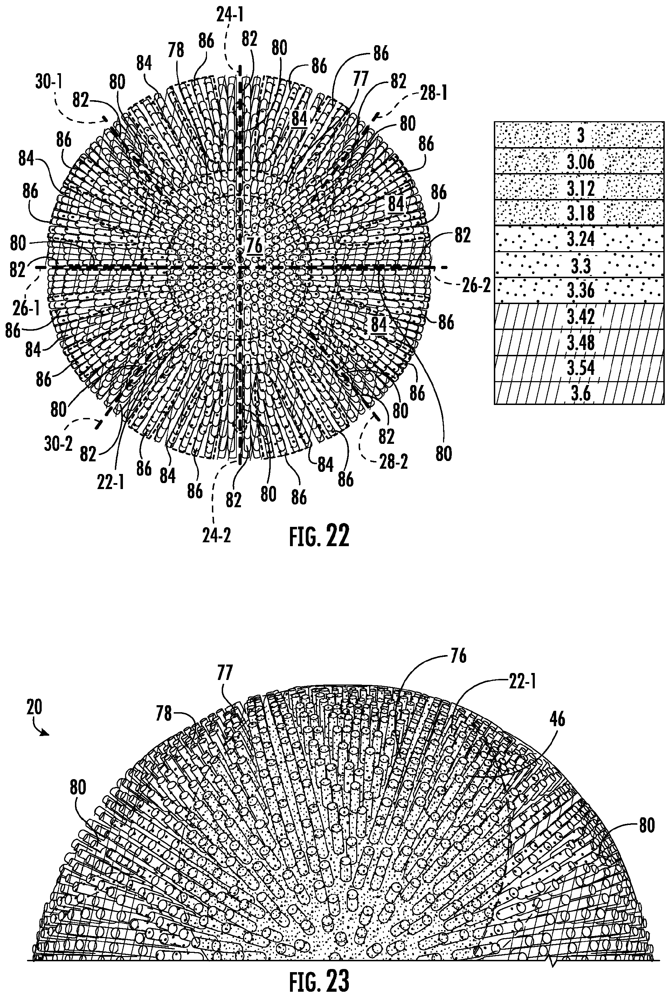

Figures 22-25 illustrate an example of basketball 20, wherein the radial beams 46 are provided with a varying radial beam diameter or thickness, wherein different radial beams in different circumferential portions of basketball 20 have different beam diameters or thicknesses. Figures 22-25 are heat maps, wherein the different patterns correspond to different beam thicknesses/diameter as measured in millimeters. Figure 23 illustrates basketball 20 without outer layer 54.

The location of surface strips 24, 26, 28 and 30 are indicated in Figures 22, 24 and 25 by broken lines. As shown by Figure 22, at opposite pole regions 22-1 and 22-2, the regions where the surface strips 24, 26, 28 and 30 converge, the radial beams 46 (the polar cap beams 76) have a lesser thickness/diameter than the radial beams at other locations about basketball 20. The polar cap beams 76 form a generally uniform circular region wherein the polar cap beams 76 have substantially the same reduced thickness.

Because the surface strips 24, 26, 28, 30 have a solid density of polymeric material, such surface strips tend to increase the rebound height when the basketballs bounced off of such surface strips. Because the surface strips 24, 26, 28 and 30 converge at pole regions 22, strips 24, 26, 28 and 30 are closest at the pole regions 22 and have the greatest surface concentration. But for the reduced thickness or diameter of polar cap radial beams 76, the high concentration of the solid surface strips 24, 26, 28 and 30 might otherwise increase the rebound or bounce height of the basketball when bounced off of the pole regions 22. The reduced thickness of the polar cap beams 76 at the pole regions 22 tends to reduce rebound height. The reduced thickness of the polar cap beams 76 at the pole regions 22 reduces bounce to neutralize or offset any bounce increase caused by the greater concentration (surface area density) of the converging surface strips. The reduced thickness or diameter of the polar cap beams 76 at the pole regions 22-1, 22-2 facilitate a more uniform rebound or bounce. In other words, basketball 20 bounces approximately the same whether the basketball 20 bounces off of the pole regions or other portions of the basketball 20.

Those radial beams 46 that are located along a circumferential perimeter of polar regions 22 and that form ring 77 (as seen in Figure 2) around the polar cap beams 76 (polar ring beams 78) have a reduced diameter or thickness. The polar ring beams 78 have a thickness that is less than the thickness of the polar cap beams 76 due to the lesser concentration of surface strips 24, 26, 28 and 30 further away from the converging points of the surface strips but still less than those radial beams 46 located at other portions of basketball 20. The reduced thickness of the polar ring beams 78 reduce or neutralize the enhanced bounce that otherwise might exist at the edges of the regions 22 due to the convergence and concentration of the surface strips. The reduced thickness of the polar ring beams 78 facilitates more consistent uniform bounce across different regions of basketball 20.

Similarly, those radial beams 46 that directly underlie those portions of surface strips 24, 26, 28 and 30 that extend from ring 77 in the shape of fingers outwardly projecting from the ring 77 (polar flare beams 80) also have a reduced diameter or thickness. In the example illustrated, the polar flare beams 78 have a diameter or thickness similar to the diameter thickness of polar ring beams 78. The reduced thickness or diameter of the polar flare beams 80 neutralizes the additional bounce that might otherwise occur along the surface strips proximate to where the surface strips converge at the polls. The reduced thickness of the polar flare beams 78 facilitates more consistent uniform bounce across different regions of basketball 20.

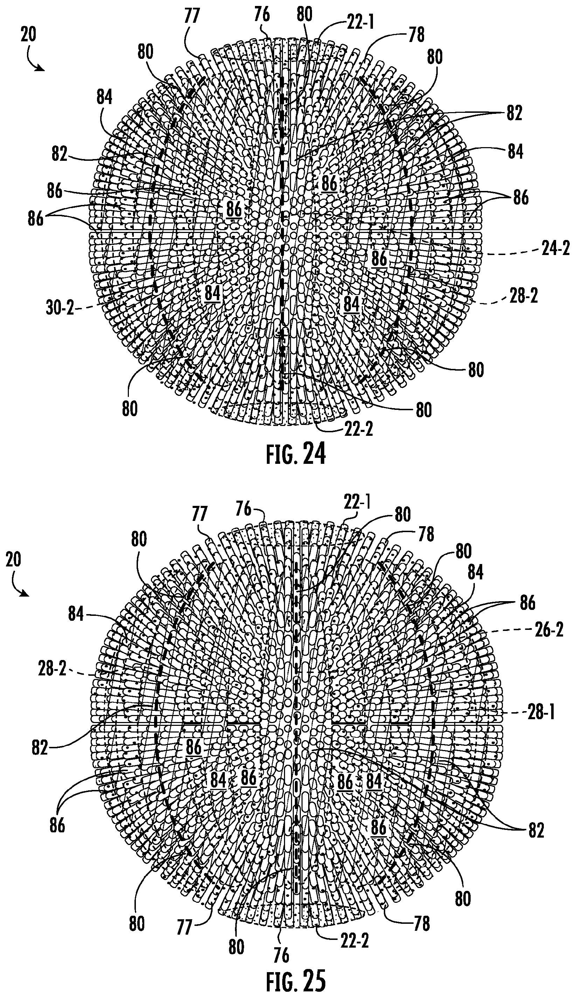

As shown by Figures 24 and 25, the thickness or diameter of the radial beams 46 also varies based upon its proximity or relationship to the intermediate portions of surface strips 24, 26, 28 and 30 that extend between the pole regions 22. In the example illustrated, those radial beams 46 between the pole regions 22 (other than the polar flare beams 80) have three general thicknesses. Those radial beams 46 directly underlying or in close proximity to the sides of surface strips 24, 26, 28 and 30 (surface strip beams 82) have a first thickness or diameter that is greater than the thickness or diameter of the polar cap beams 76 at the pole regions 22. The greater thickness or diameter of the surface strip beams 78 accounts for the shorter height and shorter beam length of such surface strip beams 82 (providing the loby shape).

Those radial beams 46 that are equidistantly circumferentially spaced between the surface strips (middle region beams 84) are the farthest from both of the surface strips. To enhance the rebound or bounce of such beams in such regions, the middle region beams 84 are provided with a greater thickness as compared to the thickness of the polar ring beams 78 and a thickness slightly less than the thickness of the surface strip beams 82.

Those radial beams 46 that extend between the surface strip beams 82 and the middle region beams 84 (the spacer beams 86) have a thickness less than the thickness of surface strip beams 82 and middle region beams 84. Spacer beams 86 have a thickness or diameter substantially equal to or slightly greater than the thickness of the polar ring beams 78. The thickness of spacer beams 86 distributes, spreads or evens out any increase in bounce that may occur at locations where the surface strip beams 78 and the middle region beams 80 are located.

Overall, the above-described distribution or variation of different radial beam thicknesses/diameters solves rebound or bounce irregularities that might otherwise exist due to the presence and layout of the surface strips 24, 26, 28 and 30. In implementations where basketball 20 is provided with a different layout of surface strips or where the surface is not loby, the above-described layout or pattern of thickness variations may likewise be different. For example, in non-loby basketballs, basketballs having a constant outer diameter, the thickness of the radial beams underlying the surface strips need not be increased to accommodate a decrease in beam length. In basketballs where the surface strips converge at regions other than the poles of the basketball, the location of those beams 46 having a reduced thickness may likewise shift to the locations where the surface strips converge. The provision of radial beams 46 having different diameters or thicknesses in different regions of the basketball may be omitted where surface strips are also omitted.

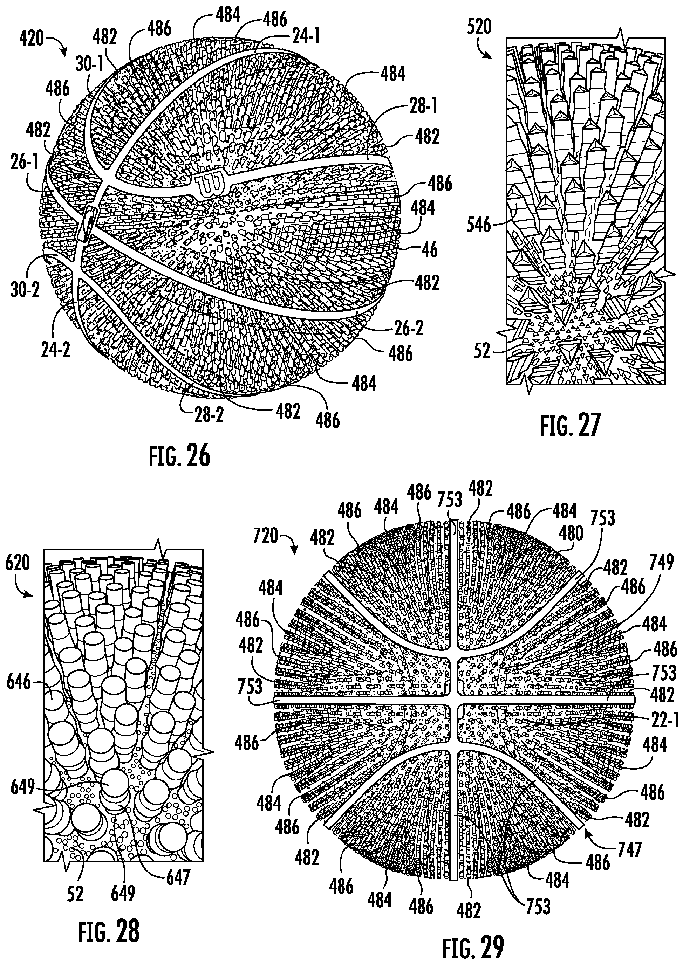

Figure 26 illustrates portions of an example basketball 420. Figure 26 illustrates just the radial beams 46 and surface strips 24, 26, 28 and 30, omitting inner lattice 42 and outer lattice 44. The radial beams 46 are further patterned to provide a heat map indicating their different diameters or thicknesses. Figure 26 illustrates another example of how the diameters or thicknesses of the radial beams may be varied and are patterned to provide a more uniform and consistent bounce when the basketball bounces off different portions of its circumference. Basketball 420 comprises the same surface strips 24, 26, 28 and 30 as basketball 20. Like basketball 20, basketball 420 comprises the above-described inner layer 52 and an outer layer similar to outer layer 54 but being non-loby. The radial beams 46 have a different pattern of radial beam thicknesses. In the example illustrated, those radial beams 46 extending along the surface strips (surface strip beams 482) have a reduced thickness. Those radial beams circumferentially and centrally located between the surface strips (middle region beams 484) have an increased thickness, a thickness greater than that of surface strip beams 482. Those radial beams that extend between the surface strip beams 482 and the middle region beams 484 (spacer beams 486) have a thickness greater than that of surface strip beams 482, but less than that of middle region beams 484.

Figure 27 is an enlarged view of a portion of a basketball 520, with outer layer 54 omitted. Basketball 520 is similar to basketball 20 except that basketball 520 comprises radial beams 546 in place of radial beams 46. Radial beams 546 each have varying thicknesses along their length and have non-circular cross-sectional shapes. In the example illustrated, beams 546 have triangular cross-sectional shapes. The varying beam thickness profiles in the alternative shapes may be used to vary axial stiffness and thereby vary or control rebound characteristics for the region of the basketball 520 including such radial beams 546.

Figure 28 is an enlarged view of a portion of a basketball 620, with outer layer 54 omitted. Basketball 620 is similar to basketball 20 except that Best Basketball 620 comprises radial beams 646 in place of radial beams 46. Radial beams 646 have circular cross-sections but have non-uniform thicknesses along their beam lengths. In the example illustrated, each of radial beams 646 has a middle or central portion 647 having a first diameter or thickness and opposite end portions 649 having a second smaller diameter or thickness. In some implementations, the location of the central portion 647 relative to the end portions may be moved up or down, towards inner layer 52 or outer layer 54 to vary or control rebound performance. Likewise, the thickness or diameter of the central portion 647 and/or the end portions 649 may be varied to vary and control rebound performance.

Figure 29 illustrates portions of an example basketball 720. Basketball 720 is similar to basketball 420 except that basketball 720 various a density of radial beams 46 and additionally comprises an internal skeleton 747. In contrast to basketball 420, outer layer 54 is loby. Figure 29 omits inner and outer layer 54 for purposes of illustration. Figure 29 omits surface strips 24, 26, 28 and 30 for purposes of illustration. As with basketball 420 in Figure 26, the radial beams 46 are further colored to provide a heat map indicating their different diameters or thicknesses.

In the two opposite pole regions 22-1 and 22-2 (not shown), basketball 720 has a lower density of radial beams 46. The lower density of radial beams 46 reduces, offsets or neutralizes any extra rebound or bounce that may occur due to the increased concentration of surface strips 24, 26, 28 and 32, as well as the higher concentration of portions of skeleton 747. The density of radial beams 46 increases outside of closure 749 formed by the converging portions of skeleton 747. The density of radial beams 46 is reduced in those regions adjacent to or underlying those portions of surface strips 24, 26, 28 and 30 that are in close proximity to closure 749.

Inner skeleton 747 is provided by added reinforcing channels 753 on the outer wall of the inner lattice 42. The reinforcing channels 753 provide additional rebound performance in such regions. Although the reinforcing channels 753 converge to form closure 759, the additional rebound at such pole regions 22-1, 22-2 is offset by the lower density of radial beams 46 and their reduced thicknesses.

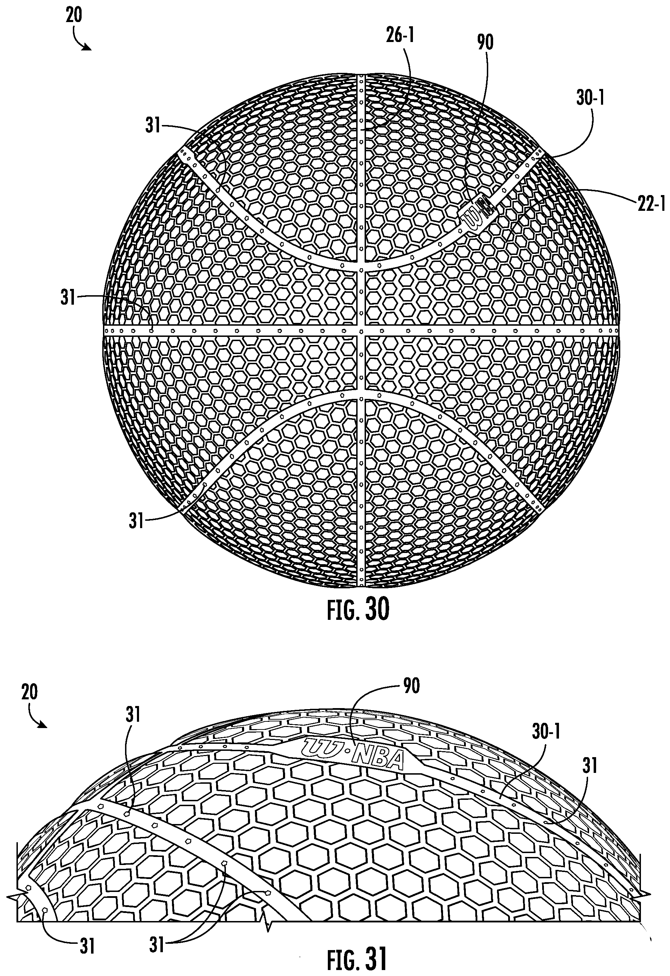

Figures 30-39 illustrate various examples of how any of the above-described basketballs may be provided with branding, logos or other information (customized information, manufacture date, style or version data, patent data, advertising or the like) at different locations (hereinafter referred to as an "information landing", a "landing" or "landings"). Figures 30-39 illustrate various examples of how such information may be presented and located so as to have a reduced impact upon the feel and rebound performance/consistency of the basketball. Figures 30-39 illustrate various information locations on a single basketball 20. As should be appreciated, basketball 20 may omit all or at least some of the particular information landings.

Figures 30 and 31 illustrate information landing 90. Information landing 90 is located or formed along surface strip 30-1 and is wider than those portions of surface strip 30-1 which extend from opposite ends of information landing 90. Information landing is located nearer within polar region 22-1, proximate to where surface strip 30-1 connects to surface strip 26-1. In the example illustrated, landing 90 has embossed thereon logo information comprising "W" and "NBA". In other implementations, other information may be branded on landing 90, such as shown in Figures 1 and 2. In yet other implementations, the information may be provided are formed upon landing 90 in other fashions. For example, the information may be placed upon landing 90 by printing, stamping or molding. The recessed nature of such embossing lessons any rebound impact.

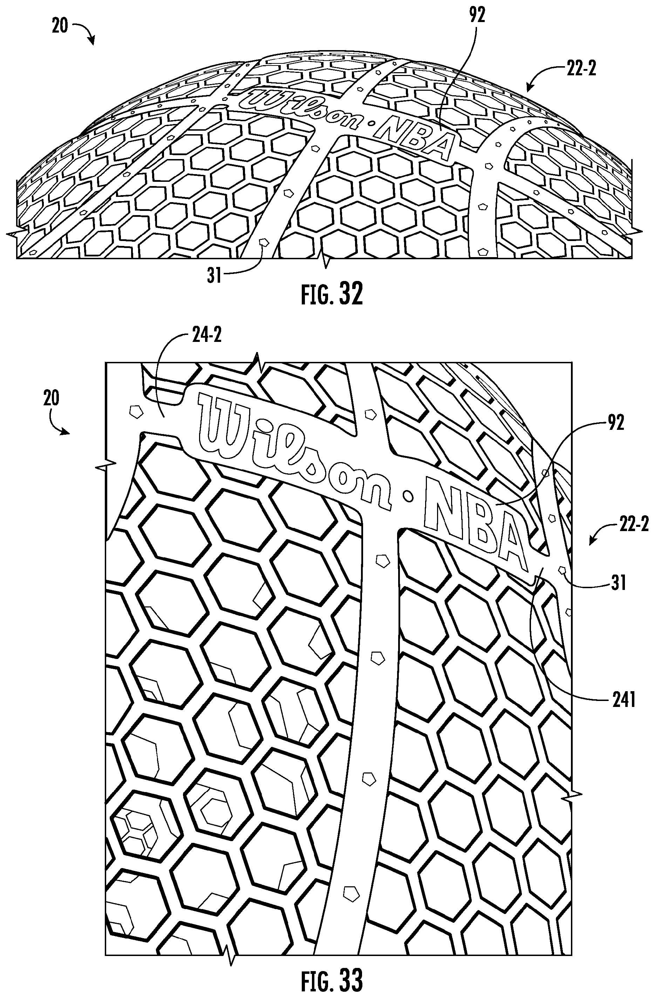

Figures 32 and 33 illustrate an example landing 92. Landing 92 is formed at the center of pole region 22-2 of basketball 20. Landing 92 is formed along a conjunction of surface strips 24-1 and 24-2. Landing 92 has a width greater than the width of surface strips 24-1 and 24- and is recessed along with surface strips 24-1 and 24-2 (due to the loby shape). In other implementations, landing 92 may be formed at pole region 22-1. In other implementations, landing 92 may be formed at a conjunction of surface strips 26-1 and 26-2 at home region 22-2 or at pole region 22-1. As with landing 90, landing 92 has embossed thereon logo information comprising "Wilson" and "NBA". In other implementations, information may be provided on landing 92 in other fashions such as by printing, stamping or molding.

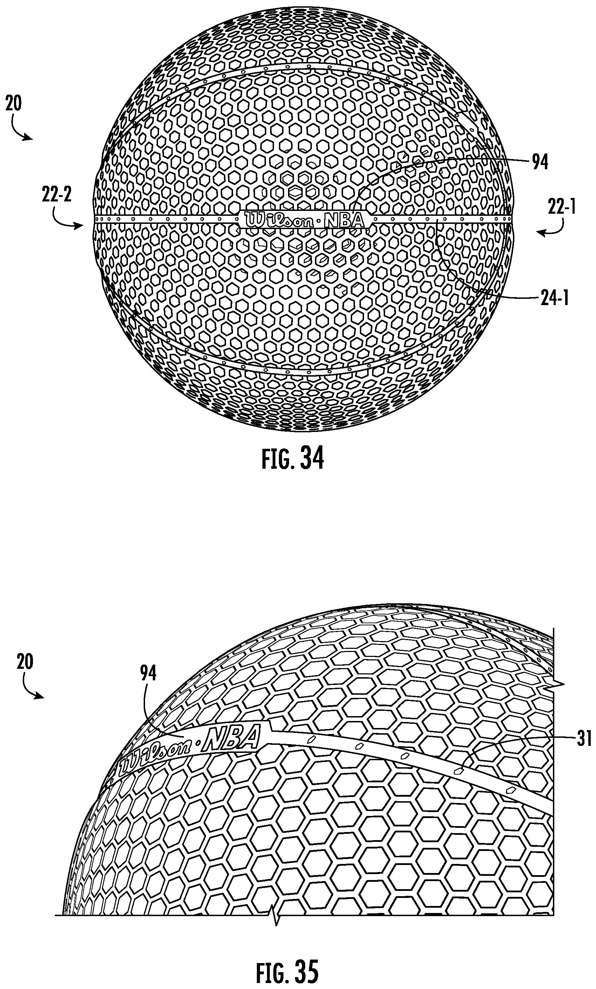

Figures 34 and 35 illustrate an example landing 94. Landing 94 is formed at a center point of surface strip 24-1, centered between the centers of pole regions 22-1 and 22-2. Landing 94 has a width greater than the width of surface strip 24-1 and is recessed along with surface strip 24-1 (due to the loby shape). In other implementations, landing 94 may alternatively be formed along at center points between the pole regions 22-1 and 22-2 along any of the surface strips 24, 26, 28 and 30. Like the other landings, landing 94 has embossed thereon logo information comprising "Wilson," the Jerry West NBA logo, and "NBA". In other implementations, information may be provided on landing 92 in other fashions such as by coating, printing, stamping or molding.

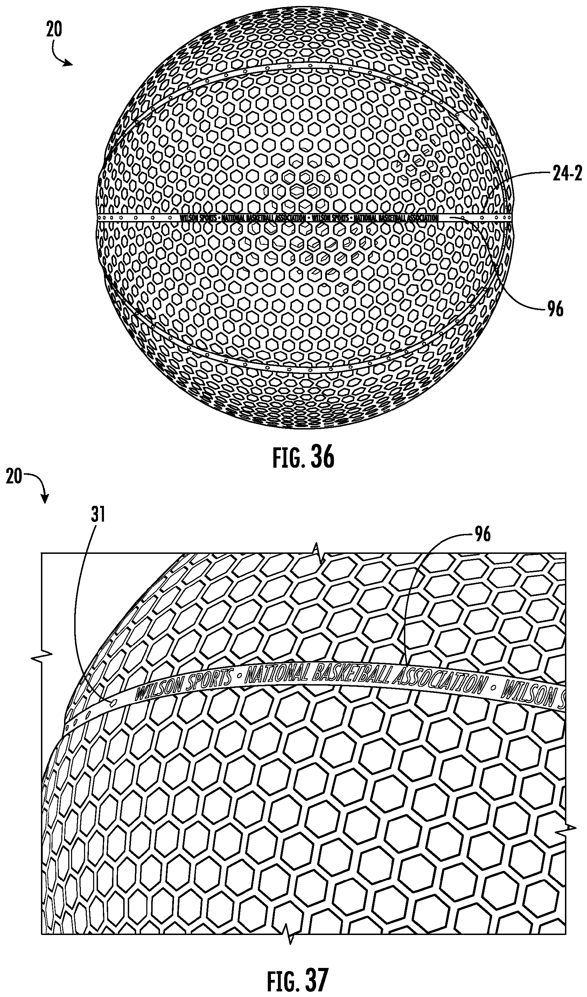

Figures 36 and 37 illustrate an example landing 96 of basketball 20. Landing 96 is formed as part of a central portion of surface strip 24-2. Landing 96 does not alter the width of surface strip 24-2. In the example illustrated, landing 96 includes information that projects from the outer surface of surface strip 24-2. The height of the raised portions providing the information is less than the extent to which the outer surface of surface strip 24-2 is recessed. Because landing 96 does not alter the width of surface strip 24-2 and because the raised data portions have a height less than an extent to which surface strip 24-2 is recessed, the provision of landing 96 and his information has a lower impact upon any rebound or bounce variation that might otherwise result from its presence. As should be appreciated, landing 96 may be formed on any of the surface strips a central point along such surface strips between the polar regions 22 or at other locations along the surface strips.

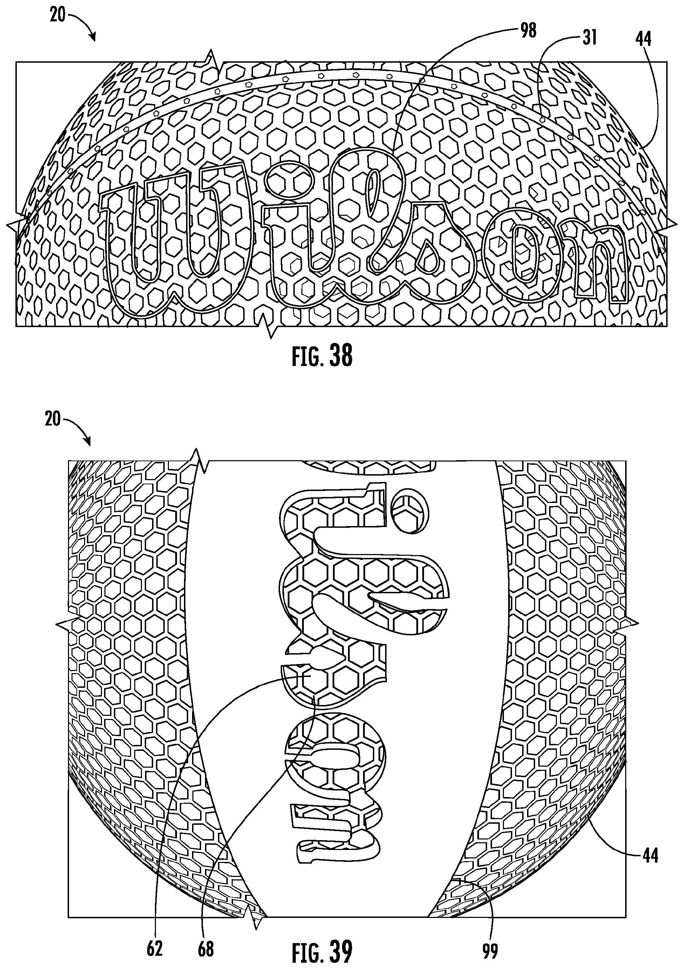

Figure 38 illustrates a portion of basketball 20 provided with external information 98. Figure 38 illustrates an example of how information may be integrated and outer lattice each of the above-described 3D printed basketballs. In the example illustrated, the information is in the form of an example logo "Wilson". The logo is formed by 3D printing a line of material over and across voids of the cells of the outer lattice. The example presents information in a subtle fashion and is thus likely to have a large impact on the rebound performance of basketball 20 due to the inclusion of the example logo.

Figure 39 illustrates a portion of basketball 20 provided with external information coating 99. Information coating 99 is applied with a post process application. For example, information coating 99 may be coated, painted or otherwise formed on the exterior of outer lattice 44 of basketball 20. In the example illustrated, the coating may cover and span across the open cells of outer lattice 44. In the example illustrated, information coating 99 is presented in the shape of a panel. The panel may be provided with various customized colors and other ornamentation.

In some implementations, what is shown in Figure 39 may be in the form of a mask 99 which is positioned over or more removably applied to the outer surface of basketball 20. In such an implementation, a paint or other durable coating may be sprayed or otherwise applied across the mask 99, through which openings, forming a patterned coating on outer lattice 44. Depending upon factors such as the viscosity of the coating and the amount of coating, the coating applied through the openings in the mask 99 may cover the openings or voids of the individual cells of outer lattice 44 or may alternatively cover the outer surfaces of the outer circumferential beams 68 while leaving intact the openings or voids of the individual cells 62.

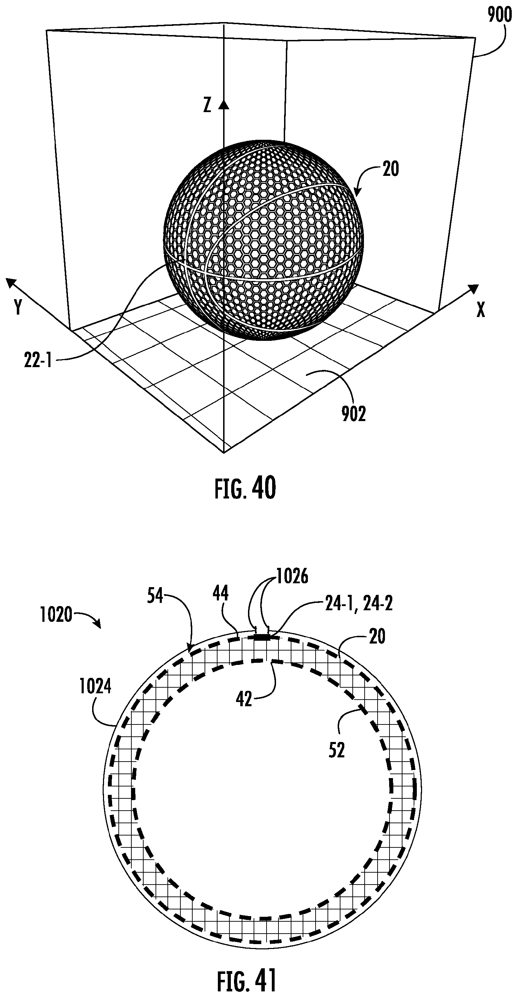

Figure 40 illustrates one example process or method for forming a 3D printed basketball, such as basketball 20. In one implementation, basketball 20 is formed from an additive printing process such as a selective laser sintering or multi-jet fusion. With selective laser sintering and multi-jet fusion, basketball 20 is formed or built in a layer-by-layer fashion in the z direction (the vertical direction) resulting in multiple x-y plane layers. With selective laser sintering and multi-jet fusion, bed 900 is provided with a polymeric powder capable of being sintered (fused or melted).

With selective laser sintering (SLS), a laser is selectively applied to the powder to selectively heat and sinter/melt portions of the powder to form a particular x-y plane layer. The selective application the layer may involve a computer program which controls the x-y (horizontal) positioning of a laser and which controls lowering of the bed, all based upon a sintering pattern or architecture corresponding to the different structures and features of basketball 20 and embodied as code in a non-transitory computerized readable medium. The bed may be lowered and a new layer of fresh powder formed overtop the previously formed x-y plane layer. After the two-dimensional layer of sintered or fused material is made, the platform or floor 902 advances (is lowered) and a new layer of powder is swept over the prior completed layer. The laser is once again selectively applied to selectively heat and fuse/melt/sinter selected portions of the fresh powder to form the next x-y plane layer, potentially stacked upon the prior x-y plane layer, to form a 3D shape. This process continues until basketball 20 is completed.

Multi-jet fusion (MJF) printing is similar to selective laser sintering except that an absorptive die is printed, such as through inkjet printing, on the powder to form a sinter pattern for a particular x-y plane of the basketball being formed. The dye, when activated with a laser or other radiation, causes the powder to melt and fuse/sinter. The printed sinter pattern of dye defines where powder is fused/melted/sintered upon being activated by a potentially less selective laser or application of a wide band of powder sintering heat or radiation. The selective application of the dye may involve a computer program which controls the x-y (horizontal) positioning of a printer or its printhead(s), such as an inkjet printer, and which controls lowering of the powder bed, all based upon a sintering pattern or architecture corresponding to the different structures and features of basketball 20 and embodied as code in a non-transitory computerized readable medium. As with selective laser sintering, the layer-by-layer process is repeated, wherein the sequentially formed layers of sintered powder form basketball 20.

As shown by Figure 40, basketball 20 may be formed in a layer-by-layer fashion using SLS or MJF in the example powder bed 900. The panel or floor 902 of powder bed 900 may be sequentially lowered along the z-axis during the formation of each of the layers of basketball 20. As discussed above, a laser may be selectively positioned or a sinter activating pattern of "a dye" may be selectively applied to the fresh powder of each layer to form the features of basketball 20.

Material properties of different portions or regions of basketball 20 may vary depending upon the orientation at which basketball 20 is printed in bed 900. Because basketball 20 may be printed in a layer-by-layer method using SLS or MJF properties of basketball 20 may have stronger/stiffer/higher elongation in the horizontal or x-y plane and be weaker in the z axis or vertical direction. As shown by Figure 40, the additive printing of basketball 20 is performed such that the centers of the regions 22-1 and 22-2 are aligned in the x-y plane (any rotation about the z-axis). Said another way, with basketball 20, the additive or 3D printing of basketball 20 using SLS or MJF is performed such that the center point of polar regions 22-1 and 22-2 are formed in the same x-y plane or layer of sintered/fused powder. The center point of the polar regions 22 may be maintained in the same x-y plane or layer of fused powder with any rotation about the X axis. The particular orientation of the basketball 20 being formed within bed 900 may be defined by the particular programming, instructions or code contained in the non-transitory computerized readable medium which directs the lowering of floor 902 as well as the selective application of a laser beam or the selective application of the dye during the layer-by-layer printing process. Because basketball 20 is printed with the center point of the polar regions 22-1, 22-2 aligned in the x-y plane during printing, basketball 20 may have a more consistent shape and rebound along its various circumferential regions as compared to orienting or centering the center points of pole regions 22-1, 22-2 along the z-axis. Printing with the polls on the sides achieves more uniform material properties, increases overall rebound and reduces dead spot.

Because the 3D printed material may be stiffer at the top and bottom of the basketball 20 as compared to the sides of basketball 20 due to layer-by-layer deposition (stiffer may equate to higher rebound), in some implementations, those radial beams 46 proximate to a top and bottom of basketball 20 (as seen in Figure 40) may be provided with a thickness that is relatively less than the corresponding thickness of the beams along the sides of the basketball (as seen in Figure 40) to provide more uniform rebound. The radial beams not reinforced by surface strips (also referred to as reinforcing channels) may also be stiffened with increased stiffness as shown in Figure 40.

In addition to rebound, the shape of the basketball may also be influenced by the layer-by-layer 3D printing process. The size of basketball may impact the player's ability to the ball and perform maneuvers during play. Successively formed layers that make up the basketball may result in dimensions of the basketball varying which affect both grip performance as well as rebound and role characteristics. To address such variations, the X-Y-Z scale factors are adjusted for such layer-by-layer 3D printing in a manner specific to each additive powder method, ball geometry, material and such or machine and may be tuned.

Material properties of basketball 20 may be sensitive to how basketball 20 is printed. Typical data sheets regarding materials report material properties as injection molded values. However, material properties vary greatly based on: (1) print method, e.g., selective laser sintering (SLS) or multi-jet fusion (MJF), (2) depending on print geometry due to skinning effects, and (3) print orientation, as both SLS and MJF are built layer-by layer in z direction, resulting in multiple x-y plane layers. In

In some implementations, basketball 20 (or any of the other above-described 3D printed basketballs) may be formed from a polymer having the following properties (measured as injection molded):

| **Material Property** | **Units** | **Value,** Current embodiment | **Value,** Acceptable Range | **Notes** |
|---|---|---|---|---|
| | Test Method | | | Why Important |
| Density | g/m³ | 1.01 | 0.9-1.2 | Mass target |
| Durometer | Shore A | 90-92 | 80-92 | Hand feel |
| Flexural modulus | MPa | 90 | 80+ | Rebound |
| Tensile modulus | MPa | 80 | 50+ | Rebound, durability |
| Ultimate tensile | MPa | 40 | 30+ | Durability |
| Elongation | % | 550 | 150+ | Durability |
| Rebound resilence | %, ASTM D7121/DIN53512 DIN53516 | 58 | 50+ | Rebound |

In some implementations, any of the above-described 3D printed basketballs may be 3D printed from a thermoplastic polymer. In some implementations, any of the above-described 3D printed basketballs may be formed from a polyether block amide or PEBA thermoplastic elastomer such as PEBAX (Registered Trademark) 4533 commercially available from Arkema imprinted on EOS branded or DTM/ISI (Non-EOS branded equipment) printers. In some implementations, any of the above-described 3D printed basketballs may be 3D printed from an Evonik thermoplastic polyamide (a chemical copolymer of a thermoplastic elastomer and a highly flexible nylon) (grades; racial soft to hard segment).

In some implementations, any of the above-described 3D printed basketballs may be 3D printed from an Evonik thermoplastic copolyester, Infinam 8008P printed on Hewlett-Packard or other powder-based printers. In some implementations, any of the above describe 3D printed basketballs may be 3D printed from a material such as PA12. From a rigidity/energy return standpoint, PA12 has value of 1.5-2.5 GPa young's modulus, but elongation to break is only ~10%, which may be especially beneficial given the high frequency at which the basketball is to be bounced or dribbled. Higher elongation is important because the material undergoes high strain rate deformation to relatively high strains, with repeated cycles with limited recovery time between impacts. If the elongation to break is 100% for example, an event may cause a strain of 20% within 10 ms.

Basketball 20, formed from the above materials and having the above-described configuration has a size and performance characteristics equivalent or similar to that of officially sanctioned competitive play basketballs, such as competitive play basketballs sanctioned by the NBA, NCAA and NFHS (National Federation of High Schools). For example, when dropped from a height of 1828.8 mm (72 inches) measured from the bottom of the ball, minimum rebound for a retail ball is 1244.6 mm (49 inches) (measured from top of ball) and for an NBA game ball it is 1320.8 mm (52inches). The maximum rebound for an NBA ball is 1422.4 mm (56 inches). Basketball 20 may have a rebound of at least 1320.8 mm (52 inches) and slightly above 1371.6 mm (54 inches) when dropped from a height of 1828.8 mm (72 inches). Basketball 20 further has a reduced "dead spot" (max rebound - min rebound across different locations on the ball) of under 50.8 mm (2 inches), comparable to NBA sanctioned competitive play basketballs.

In some implementations, basketball 20 formed according to the above-described parameters, has the following characteristics relative to an NBA sanctioned competitive play basketball.

| | **Detail** | **NBA Game ball** | **3D Printed Basketball** | **Note** |
|---|---|---|---|---|
| | | 749-759 | 742-754 | (Circumference) Intentionally small to improve single-hand grip for dunk. Can be modified as needed. |
| | Circumference(mm) | 567-602 | 599-628 | |
| | Mass(g) | 1320.8 - 1422.4 (52-56") | 1320.8 - 1346.2 (52-53") | |
| | Rebound (mm) | | | |
| | OOR (mm) | <3 | <3 | (Mass) Intentionally higher, responding to player prototype test feedback |
| **Specifications** | Wobble Test | L2 - R2 | L2 - R2 | |
| | Abrasion Loss (g) | 9/32 | 25 | |
| | Testing Cycles (K) | 25 | 25 | (Rebound) 1219.2-1270mm |
| | Testing Plate | Wood | Concrete | (48-50") = 0.276-0.414bar |
| | Inflating Instruction on valve (bar) | 0.552 (8psi) | | (5-6 psi) |
| | | | | (OOR) Most ball are now <3 with some outliers |
| **Other** | Blunt impact (baseball bat) | OK | OK | |
| | Durability - Scottie Piston (K) | 100 | Acceptable | Uneven bounce > 50K |
| | Durability - Shooting machine (K) | 10 | Acceptable | Uneven bound after 10K |
| | Dead spot (mm) | <25.4 (1") | <101.6 (4") | Still improving |

The open celled exterior of the above-described basketballs, due to the open cells of outer lattice 44 and inner lattice 42, may result in aerodynamic resistance which may impact the passing of the basketball and the flight of the basketball during a shot. In other words, the basketball is hollow and generally perforate with air flow passages from the exterior of the basketball communicating with the hollow interior and the center point of the basketball. The air flow passages also continuously extend through the basketballs from one outer side to another outer side of the basketballs. In some implementations, any of the above describe 3D printed basketballs may be additionally provided with a skin which covers, blocks, or occludes the cell openings of the inner lattice 42 and/or the outer lattice 44. In some implementations, the skin may be translucent or transparent to maintain the ability to view the unique and aesthetically pleasing pattern of at least outer lattice 44. To reduce any breaks or seams, and assembly complexity, the skin may comprise a one-piece skin having a single pair of opposing edges, a single opening or no openings or edges. In some implementations, the skin may serve as a bladder having an interior that may be inflated. In other implementations, the skin may have an interior that is exposed to atmosphere, wherein the interior is not inflated and is at atmospheric pressure. The resilient nature of wall 40 facilitates basketball 20 having an interior that may be at pressure, eliminating the need to monitor or maintain inflation of the basketball.

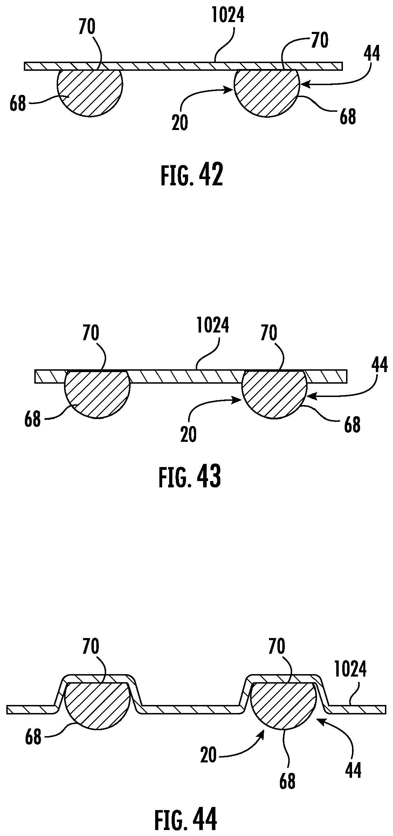

Figures 41 and 42 are sectional views schematically illustrating an example basketball 1020 provided with a skin. Figure 42 illustrates a portion of outer lattice 44 covered by a skin. Basketball 1020 comprises basketball 20 (described above) provided with an outer skin 1024. In some implementations, outer skin 1024 is translucent or transparent to facilitate and maintain the visibility of outer layer 54 of basketball 20. Outer skin 1024 is in close conformal contact with the outer surface of outer layer 54, having a contour profile that matches the outer contour profile of outer surface of outer layer 54. For example, outer skin 1024 may dip in those regions of outer skin 1024 that overlie the recessed surface strips 24, 26, 28 and 30, maintaining the loby shape or profile of the internal basketball 20 and the final skin covered basketball 1020.

Outer skin 1024 may be formed from a durable polymeric material and may be extremely thin so as to have a reduced impact on the overall weight, size and rebound characteristics of basketball 1020. In some implementations, outer skin 1024 may have a thickness of at least 0.3 mm and no greater than 5 mm. In some implementations, outer skin 1024 may have a thickness of less than 1 mm. In some implementations, outer skin 1024 may be formed from material such as thermoplastic polyolefin or thermoplastic/thermoset polyurethane. As shown by Figure 42, outer skin 1024 may span across the outer circumferential beams 68 of outer lattice 44. Outer skin 1024 may cover the tops 70 of such beams 68. Outer skin 1024 may additionally overlap and cover surface strips 24, 26, 28 and 30 (illustrated in the figures described above).

In some implementations, outer skin 1024 may comprise a single unitary one-piece layer or film having a single set of opposing edges 1026. The opposing edges 1026 may form an opening into which basketball 20 may be inserted. In some implementations, the opposing edges 1026 are aligned with one or more of the surface strips, such as surface strips 24-1, 24-2 (schematically shown in Figure 41) so as to lessen any variation that may occur along such edges 1026. In some implementations, edges 1026 may be recessed within the recess channel or groove provided by the loby shape of basketball 20.

In some implementations, outer skin 1024 may be shrunk wrap about basketball 20. For example, outer skin 1024 may be provided as a film which is wrapped about basketball 20 and was subsequently heated so as to shrink the film into close conformal contact and even fused to the outer surface of outer layer 54. In some implementations, outer skin 1024 may be co-molded about basketball 20. As shown by Figure 43, in some implementations, outer skin 1024 may be applied to basketball 20 so as to be flush or level with tops 70 of beams 68 of outer lattice 44.

As shown by Figure 44, in some implementations, outer skin 1024 may be applied to basketball 20 so as to at least partially encapsulate or wrap around circumferential beams 68 of outer lattice 44. This construction may provide a greater surface area for fusion, melting, bonding or adhering of outer skin 1024 to the outer surface of outer layer 54. This construction may also provide a form of a mechanical lock between circumferential beams 68 of outer lattice 44 and outer skin 1024. In some implementations, outer skin 1024 may be pressed against the exterior of basketball 20 with a mold having an interior surface provided with projections that press portions of outer skin 1024 partially into the hexagonal voids of the hexagonal cells formed by circumferential beams 68. In some implementations, a needle may be passed between edges 1026, wherein a vacuum may be applied through the needle to the interior of basketball 20 to suck or draw outer skin 1024 (while in a flexible, pliable or partially melted state) into close conformal contact with the outer surface of outer layer 54 and, in the implementation shown in Figure 44, to draw portions of outer skin 1024 into the hexagonal cells formed between circumferential beams 68. Thereafter, the needle may be withdrawn, leaving outer skin 1024 either fused to beams 68, mechanically locked to beams 68 and/or bonded to tops 70 and sides of beams 68 (via an adhesive applied to beams 68 prior to the application of outer skin 1024 or applied to a face of outer skin 1024). In such implementations, the interior of the completed basketball 1020, with skin 1024, may be exposed to atmospheric pressure through the openings through which the needle was inserted.

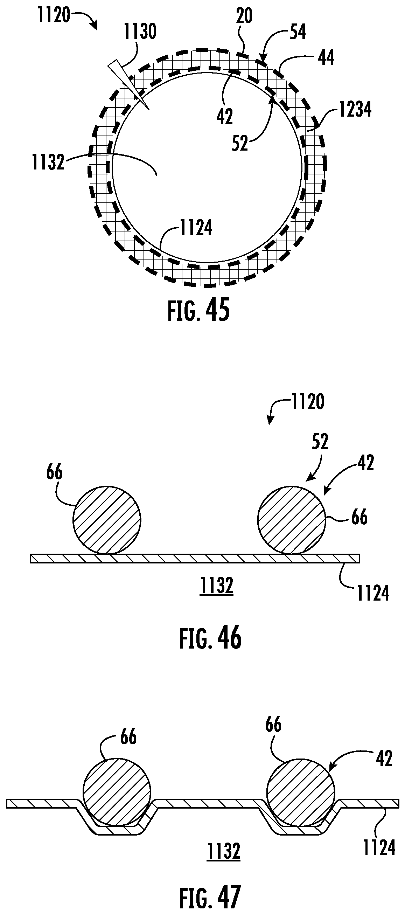

Figures 45 and 46 are sectional views schematically illustrating portions of an example basketball 1120 provided with an inner skin 1124. Figure 46 illustrates a portion of inner lattice 42 covered by or supporting inner skin 1124. Basketball 1120 comprises basketball 20 (described above) provided with an inner skin 1124. In some implementations, inner skin 1124 is translucent or transparent to facilitate and maintain the visibility through and across basketball 20. In some implementations, inner skin 1124 may be opaque. Inner skin 1124 is in close conformal contact with the inner surface of inner layer 52, inner lattice 42, having a contour profile that matches the inner contour profile of inner surface of inner layer 52.

Inner skin 1124 may be formed from a durable polymeric material and may be extremely thin so as to have a reduced impact on the overall weight, size and rebound characteristics of basketball 1120. In some implementations, inner skin 1124 may have a thickness of at least 0.3 mm and no greater than 5 mm. In some implementations, inner skin 1124 may have a thickness of less than 1 mm. In some implementations, inner skin 1124 may be formed from material such as thermoplastic polyolefin or thermoplastic/thermoset polyurethane. As shown by Figure 46, inner skin 1124 may span across the circumferential beams 66 of inner lattice 42. Inner skin 1124 may cover the interior facing surfaces of such beams 68.

In some implementations, inner skin 1124 may be adhesively bonded to the interior surface of beams 68. For example, an adhesive may be applied to such surfaces of beams 68 or to a face of inner skin 1124. In other implementations, inner skin 1124 may be melted or fused to inner surfaces of beams 66 through the application of heat. As shown by Figure 45, in some implementations, a cannula, trocar or needle 1130 may be inserted through the open cells formed by outer lattice 44 and inner lattice 42, into the interior 1132 of basketball 20. Thereafter, a collapsed balloon, formed by inner skin 1124, may be inserted through the needle 1130 into the interior and inflated through needle 1130. The collapsed balloon may be inflated to a state such that its outer surface or outer wall (skin 1124) expands and is brought into contact with the inner surface portions of beams 68.

As noted above, in some implementations, skin 1124 is adhesively bonded to beams 68. In other implementations, the gas inflating the balloon may be at a temperature sufficient to heat the wall of the balloon to a temperature to fuse the wall of the balloon (skin 1124) to beams 66. In yet other implementations, heat may be applied to the exterior basketball 20, the heat being insufficient to melt or deformed basketball 20 but being sufficient to melt and fuse skin 1124 to beams 66. Thereafter, needle 1130 may be withdrawn leaving inner skin 1124 either fused to beams 66 and/or bonded to tops 70 and sides of beams 68 (via an adhesive applied to beams 68 prior to the application of outer skin 1024 or applied to a face of outer skin 1024). In such implementations, the interior of the completed basketball 1020, with skin 1124, may be exposed to atmospheric pressure through the openings through which the needle was inserted.

In some implementations, inner skin 1124 may alternatively be injected through needle 1130 along the interior surfaces of layer 52 and inner lattice 42 or may be sprayed onto such surfaces and using needle 1130. The material may be deposited so as to form a continuous and imperforate film across inner lattice 42.

As shown by Figure 47, in some implementations, the interior 1132 may be inflated through needle 1130 to an extent such projects into the cell formed by beams 66 of inner lattice 42, at least partially wrapping about or encapsulating beams 66. By wrapping skin 1124 at least partially about beams 66, a greater surface area is provided for adhesively bonding or fusing skin 1124 to beams 66 of inner lattice 42. In some implementations, such wrapping, or at least partial encapsulation, may additionally form a mechanical lock to further enhance retention of skin 1124 to beams 66.

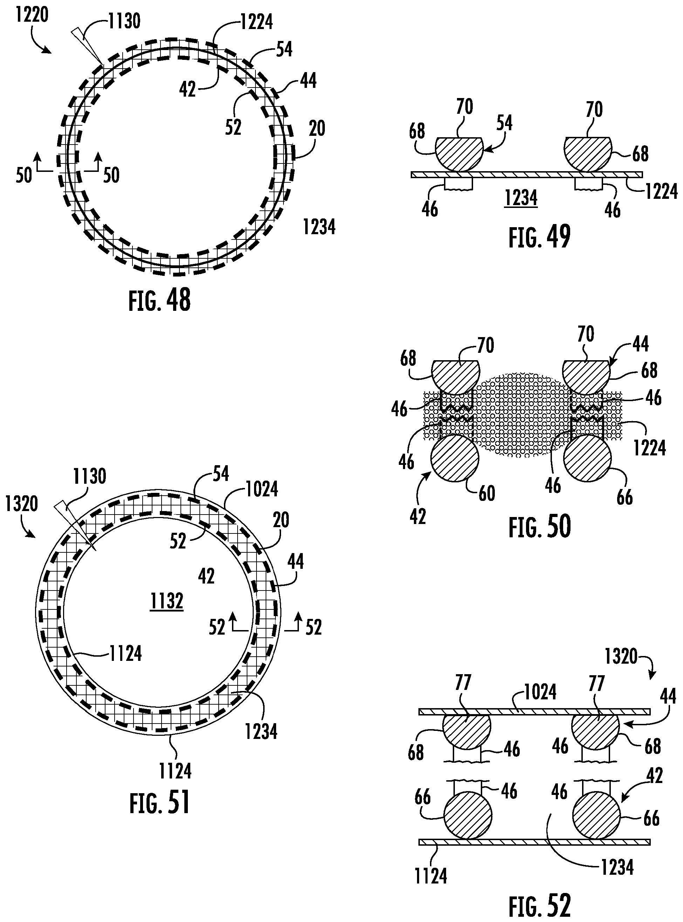

Figures 48 and 49 are sectional views schematically illustrating portions of an example basketball 1220 having an intermediate or middle skin 1224. Figure 49 illustrates middle skin 1224 and circumferential beams 68 of outer lattice 44. Basketball 1220 comprises basketball 20 (described above) provided with middle skin 1224. In some implementations, middle skin 1224 is translucent or transparent to facilitate and maintain the visibility through and across basketball 20. In some implementations, middle skin 1224 may be opaque. Middle skin 1224 is in close conformal contact with the inner surface of inner layer 52, inner lattice 42, having a contour profile that matches the inner contour profile of inner surface of inner layer 52.

Middle skin 1224 may be formed from a durable polymeric material and may be extremely thin so as to have a reduced impact on the overall weight, size and rebound characteristics of basketball 1220. In some implementations, middle skin 1224 may have a thickness of at least 0.3 mm and no greater than 5 mm. In some implementations, middle skin 1224 may have a thickness of less than 1 mm. In some implementations, middle skin 1224 may be formed from material such as thermoplastic polyolefin or thermoplastic/thermoset polyurethane. As shown by Figure 49, middle skin 1224 may span across the circumferential beams 66 of inner lattice 42. Middle skin 1224 may cover the interior facing surfaces of such beams 68.

In some implementations, middle skin 1224 may be adhesively bonded to the interior surface of beams 68. For example, an adhesive may be applied to such surfaces of beams 68 or to a face of middle skin 1224. In other implementations, middle skin 1224 may be melted or fused to inner surfaces of beams 66 through the application of heat.

As shown by Figure 48, in some implementations, a cannula, trocar or needle 1130 may be inserted through the open cells formed by outer lattice 44 and into the middle space 1234 circumferentially extending between layers 52 and 54 of basketball 20. Thereafter, a material may be sprayed or jetted into middle space 1234. In some implementations, basketball 20 may be placed within an outer spherical shell formed by two halves) having multiple inwardly facing cannulas, trocars or needles 1130 that simultaneously project through multiple cells of outer lattice 44 about basketball 20, wherein the material may be concurrently jetted into inner space 1234 about basketball 20. Thereafter, the completed basketball may be removed from the outer spherical injection shell, resulting in the multiple needles also being withdrawn.

In some implementations, the material may comprise a fluid. In other implementations, the material may be carried by an aerosol. The material injected by needle 1130 may solidify or coagulate to form skin 1224 which spans across the cells formed by circumferential beams 68. In some implementations, needle 1130 may be inserted through multiple spaced cells of outer lattice 42, wherein the material is injected or sprayed multiple times into inner space 1234 at different locations, wherein the material may bond to itself and overlap or connect along edges to form a continuous middle skin 1224. In some implementations, the material concurrently projected into different portions about basketball 20 by multiple needles 1130.

In some implementations, the material injected by needle 1130 through one of the open cells of outer lattice 44, sequentially through a plurality of the open cells of outer lattice 44 at different locations about basketball 20, or concurrently through a plurality of open cells of outer lattice 44 by multiple needles 1130 at different locations about basketball 20 may instead adhere to or bond to the inner surface of layer 52, the inner surface of inner lattice 42. In such an implementation, the material injected by needle 1130 may not be sufficiently thick to contact the inner surface of outer layer 52.

In yet other implementations, as indicated by Figure 50, the material injected by needle 1130 through one of the open cells of outer lattice 44 or through different spaced open cells of open lattice 44 at different locations about basketball 20 may have a sufficient thickness so as to contact and bond to both inner layer 52 and outer layer 54, both the outer surface of inner lattice 42 and the inner surface of outer lattice 44. In some implementations, the material injected by needle(s) 1130 may comprise a foam material or a material that once injected expands and foams to form a foamed middle skin 1224. In some implementations, the material may expand to a sufficient degree so as to fill inner space 1234, contacting both inner layer 52 and outer layer 54. For example, the foamed middle skin 1224 may partially wrap about or expand about both the circumferential beams 66 of inner lattice 42 and the circumferential beams 68 of outer lattice 44. In such implementations, the foamed middle skin 1224 may encircle and encapsulate radial beams 46 to further lock and retain the middle layer or skin 1224 in place. In some implementations, the material injected via needle 1130 may be translucent or transparent. In other implementations, the material injected by needle 1130 and forming middle skin 1224 may be opaque.

Figures 51 and 52 are sectional views illustrating portions of an example 3D printed basketball 1320. Basketball 1320 comprises basketball 20 (described above) provided with an outer skin 1024 and inner skin 1124 described above. Although outer skin 1024 is illustrated as extending in a circumferential plane across top 70 of beams 68 of outer lattice, similar what is shown in Figure 42, in some implementations, outer skin 1024 in basketball 1320 may be configured similar to the configuration shown in Figure 43 or Figure 44. Although inner skin 1124 is illustrated as extending in a circumferential plane, skimming along the inner surfaces of circumferential beams 66 of inner lattice 42, in some implementations, inner skin 1124 may have a configuration similar to that shown in Figure 46 or Figure 47. In yet other implementations, inner space 1234 may additionally be filled with inner skin 1224 as described above with respect to Figures 48-50.

In some implementations, the skins 1024, 1124 and 1224 have uniform characteristics and thicknesses. In yet other implementations, different portions of each of the skins 1024, 1124 and 1224 may have different characteristics or different thickness depending upon what portion of the basketball 20 the particular portion of the skin resides. For example, different portions of the same skin may have a different thickness depending upon whether the skin is adjacent to a pole region 22 of the basketball, a side of the basketball. The thickness may be varied in a continuous or in a stepwise fashion to provide the basketball with a more uniform or consistent bounce or rebound. For example, portions of the skin adjacent to the polar regions may be thinner as compared to portions of the skin along the sides of the basketball.

In some implementations, different portions of the same skin may have different chemical compositions or architectures to provide a more uniform rebound or weight distribution for the basketball. For example, with respect to implementations where middle skin 1224 is foamed, selected portions of the middle skin 1224 may have a greater degree of foaming while other portions of middle skin 1224 may have a lower degree of foaming (lesser blowing agent, greater density, a smaller number of or smaller sized cells). In some implementations where different regions of the inner space 1234 concurrently receive an injected material through different needles (as described above with respect to the spherical shell), the different needles may inject different amounts of material to provide different thickness for the scanning different regions about basketball 20 or may project different materials having different compositions in different regions about basketball 20.

In the example illustrated, each of the skins 1024, 1124 and 1224 may be transparent or translucent to permit viewing of the inner lattice 42 and the outer lattice 44. In some implementations, the skins may be translucent with one or more colors or color shades, allowing one to see through the skins, but wherein the skins have a color. In some implementations, the skins may include information, such as branding or logos. In some implementations, any of the skins may have different colored portions or simulated seams or joints so as to aesthetically appear as separate panels even though such skins are each a single continuous unitary film or sheet. In some implementations, such skins may be customized to provide graphics, personalized information or team information, training marks or the like. In some implementations, the skins may be personalized with a player's name, a player's team, a particular year, a league name or the like. In some implementations, the intermediate or middle skin 1224 may be opaque and be provided with portions with different colors, graphics or the like. In some implementations, the outer skin 1024 may be textured for example, the outer skin may have an outer surface provided with a pebble -like texture extending across an entire outer surface area of the outer skin 1024, extending in those regions that overlap or overlie the surface strips 24, 26, 28 and 30, extending in those regions that extend between the surface strips 24, 26, 28 and 30 (the simulated panel 32).

In some implementations, surface strips 24, 26, 28 and 30 may be omitted. In such implementations, radial beams 46 may have a uniform height and thickness along the entirety of the outer wall 40. In such implementations, the basketball may be provided with a single continuous outer skin similar to that shown in Figures 42-44, wherein outer skin (similar to outer skin 1024) includes opaque or dark lines having the same pattern as that of surface strips 24, 26, 28 and 30 such that the ball appears as a standard basketball. In some implementations, an entirety of the skin or the lines representing the surface strips may be textured. In some implementations, those portions of the skin between the dark lines representing the surface strips may be textured.

## Claims

1. A basketball (20) comprising:
a single integrally formed unitary body (40) comprising:
first layer (52) comprising an inner lattice (42);
second layer (54) comprising an outer lattice (44) and surface strips (24, 26, 28, 30); and
radial beams (46) interconnecting the first layer (52) and the second layer (54), wherein the radial beams (46)_comprise a first number of the radial beams (482) interconnecting the first layer (52) and the second layer (54) beneath the surface strips (24, 26, 28, 30) and a second number of the radial beams interconnecting the first layer and the second layer circumferentially (484) between the surface strips (24, 26, 28, 30) and wherein each of the first number of radial beams (482) has a first height and wherein each of the second number of radial beams (484) has a second height greater than the first height.

2. The basketball (20) of claim 1, wherein the outer lattice (44) is lobular with a plurality of lobes (36) joined along the surface strips (24, 26, 28, 30), and/or
Wherein the inner lattice (42) is spherical and non-lobular, or wherein the inner lattice (42) is lobular.

3. The basketball (20) of claim 1 or 2, wherein each of the first number of radial beams (482) has a first thickness and wherein each of the second number of radial beams (484) has a second thickness less than the first thickness, optionally wherein the radial beams comprise a third number of the radial beams (486) interconnecting the first layer (52) and the second layer (54) in circumferential regions between the surface strips (24, 26, 28, 30), each of the third number of radial beams (486) having the second height and a third thickness greater than the second thickness.

4. The basketball (20) of any preceding claim, wherein the radial beams (46) comprise a first number of the radial beams (482) interconnecting the first layer (52) and the second layer (54) inward of the surface strips (24, 26, 28, 30) and a second number of the radial beams (484) interconnecting the first layer (52) and the second layer (54) circumferentially between the surface strips (24, 26, 28, 30) and wherein each of the first number of radial beams (482) has a first thickness and wherein each of the second number of radial beams (484) has a second thickness less than the first thickness.

5. The basketball (20) of any preceding claim, wherein the outer lattice (44) comprises outer lattice beams (68) having flat outer surfaces, and/or wherein the outer lattice (44) comprises an outer textured surface.

6. The basketball (20) of any preceding claim, wherein the radial beams (46) have a uniform thickness between the inner lattice (42) and the outer lattice (44).

7. The basketball (20) of any preceding claim, wherein the inner lattice (42) and the outer lattice (44) each comprise a two-dimensional hexagonal lattice, and/or wherein the inner lattice (42) and the outer lattice (44) comprise cells (60, 62, 64) having a center-to-center distance of at least 5 mm and no greater than 12 mm.

8. The basketball (20) of any preceding claim, wherein the inner lattice (42) comprises inner lattice beams (66) having a thickness of at least 1 mm and no greater than 5 mm and wherein the outer lattice (44) comprises outer lattice beams (68) having a thickness of at least 0.8 mm and no greater than 3.5 mm.

9. The basketball (20) of any preceding claim, wherein the single integrally formed unitary body (40) is formed from a material having material properties, measured as injection molded, of:
a density of at least 0.9 g/cm³ and no greater than 1.2 g/cm³, a shore A durometer of at least 80 and no greater than 92; a flexural modulus of at least 80, a tensile modulus of at least 50, and elongation percentage of at least 150% and a rebound resilience of at least 50% as measured pursuant to ASTM D7121/DIN 53512 DIN 53516.

10. The basketball (20) of any preceding claim, further comprising an outer skin over an outer surface of the outer lattice (44), optionally wherein the outer skin is imperforate, optionally wherein the outer skin is transparent or translucent.

11. The basketball (20) of any preceding claim, further comprising an inner skin formed on an inner surface of one of the inner lattice (42) and the outer lattice (44).

12. The basketball (20) of any preceding claim, wherein the basketball (20) has a circumference of at least 742 mm and no greater than 759 mm, a mass of at least 567 g and no greater than 628 g, and a rebound of at least 1320.8 mm (52 inches) and no greater than 1346.2 mm (53 inches).

13. A computer program comprising computer executable instructions that, when executed by a processor, cause the processor to control an additive manufacturing apparatus to manufacture a basketball (20) of any preceding claim.

14. A method of manufacturing a basketball (20) of any one of claims 1 to 12, the method comprising:
obtaining an electronic file representing a geometry of the basketball (20); and
controlling an additive manufacturing apparatus to manufacture, over one or more additive manufacturing steps, the basketball (20) according to the geometry specified in the electronic file.

## Patentansprüche

1. Basketball (20), umfassend:
einen einzelnen einstückig gebildeten, unitären Körper (40), umfassend:
eine erste Schicht (52), umfassend ein inneres Gitter (42);
eine zweite Schicht (54), umfassend ein äußeres Gitter (44) und Oberflächenstreifen (24, 26, 28, 30); und
radiale Holme (46), die die erste Schicht (52) und die zweite Schicht (54) miteinander verbinden, wobei die radialen Holme (46) eine erste Anzahl der radialen Holme (482), die die erste Schicht (52) und die zweite Schicht (54) unterhalb der Oberflächenstreifen (24, 26, 28, 30) miteinander verbinden, und eine zweite Anzahl der radialen Holme, die die erste Schicht und die zweite Schicht in Umfangsrichtung (484) zwischen den Oberflächenstreifen (24, 26, 28, 30) miteinander verbinden, umfassen, und wobei jeder der ersten Anzahl von radialen Holmen (482) eine erste Höhe aufweist und wobei jeder der zweiten Anzahl von radialen Holmen (484) eine zweite Höhe, die größer als die erste Höhe ist, aufweist.

2. Basketball (20) nach Anspruch 1, wobei das äußere Gitter (44) lappenförmig ist mit einer Vielzahl von Lappen (36), die entlang den Oberflächenstreifen (24, 26, 28, 30) verbunden sind, und/oder
wobei das innere Gitter (42) kugelförmig und nicht lappenförmig ist, oder wobei das innere Gitter (42) lappenförmig ist.

3. Basketball (20) nach Anspruch 1 oder 2, wobei jeder der ersten Anzahl von radialen Holmen (482) eine erste Dicke aufweist und wobei jeder der zweiten Anzahl von radialen Holmen (484) eine zweite Dicke, die kleiner als die erste Dicke ist, aufweist, wobei wahlweise die radialen Holme eine dritte Anzahl der radialen Holme (486) umfassen, die die erste Schicht (52) und die zweite Schicht (54) in Umfangsregionen zwischen den Oberflächenstreifen (24, 26, 28, 30) miteinander verbinden, wobei jeder der dritten Anzahl von radialen Holmen (486) die zweite Höhe und eine dritte Dicke, die größer als die zweite Dicke ist, aufweist.

4. Basketball (20) nach einem der vorhergehenden Ansprüche, wobei die radialen Holme (46) eine erste Anzahl der radialen Holme (482), die die erste Schicht (52) und die zweite Schicht (54) innerhalb der Oberflächenstreifen (24, 26, 28, 30) miteinander verbinden, und eine zweite Anzahl der radialen Holme (484), die die erste Schicht (52) und die zweite Schicht (54) in Umfangsrichtung zwischen den Oberflächenstreifen (24, 26, 28, 30) miteinander verbinden, umfassen und wobei jeder der ersten Anzahl von radialen Holmen (482) eine erste Dicke aufweist und wobei jeder der zweiten Anzahl von radialen Holmen (484) eine zweite Dicke, die kleiner als die erste Dicke ist, aufweist.

5. Basketball (20) nach einem der vorhergehenden Ansprüche, wobei das äußere Gitter (44) äußere Gitterholme (68), die flache äußere Oberflächen aufweisen, umfasst, und/oder wobei das äußere Gitter (44) eine äußere strukturierte Oberfläche umfasst.

6. Basketball (20) nach einem der vorhergehenden Ansprüche, wobei die radialen Holme (46) eine gleichmäßige Dicke zwischen dem inneren Gitter (42) und dem äußeren Gitter (44) aufweisen.

7. Basketball (20) nach einem der vorhergehenden Ansprüche, wobei das innere Gitter (42) und das äußere Gitter (44) jeweils ein zweidimensionales hexagonales Gitter umfassen, und/oder wobei das innere Gitter (42) und das äußere Gitter (44) Zellen (60, 62, 64), die einen Mitte-zu-Mitte-Abstand von mindestens 5 mm und nicht mehr als 12 mm aufweisen, umfassen.

8. Basketball (20) nach einem der vorhergehenden Ansprüche, wobei das innere Gitter (42) innere Gitterholme (66), die eine Dicke von mindestens 1 mm und nicht mehr als 5 mm aufweisen, umfasst und wobei das äußere Gitter (44) äußere Gitterholme (68), die eine Dicke von mindestens 0,8 mm und nicht mehr als 3,5 mm aufweisen, umfasst.

9. Basketball (20) nach einem der vorhergehenden Ansprüche, wobei der einzelne einstückig gebildete, unitäre Körper (40) aus einem Material gebildet ist, das die folgenden Materialeigenschaften aufweist, gemessen im spritzgegossenen Zustand:
eine Dichte von mindestens 0,9 g/cm³ und nicht mehr als 1,2 g/cm³, eine Shore-A-Durometerhärte von mindestens 80 und nicht mehr als 92; einen Biegemodul von mindestens 80, einen Zugmodul von mindestens 50, und einen Dehnungsprozentsatz von mindestens 150 % und eine Rückprallelastizität von mindestens 50 %, gemessen gemäß ASTM D7121/DIN 53512 DIN 53516.

10. Basketball (20) nach einem der vorhergehenden Ansprüche, ferner umfassend eine äußere Haut über eine äußere Oberfläche des äußeren Gitters (44), wobei wahlweise die äußere Haut unperforiert ist, wobei wahlweise die äußere Haut transparent oder durchscheinend ist.

11. Basketball (20) nach einem der vorhergehenden Ansprüche, ferner umfassend eine innere Haut, die auf einer inneren Oberfläche eines des inneren Gitters (42) und des äußeren Gitters (44) gebildet ist.

12. Basketball (20) nach einem der vorhergehenden Ansprüche, wobei der Basketball (20) einen Umfang von mindestens 742 mm und nicht mehr als 759 mm, eine Masse von mindestens 567 g und nicht mehr als 628 g und einen Rückprall von mindestens 1320,8 mm (52 Zoll) und nicht mehr als 1346,2 mm (53 Zoll) aufweist.

13. Computerprogramm, umfassend computerausführbare Anweisungen, die, wenn sie von einem Prozessor ausgeführt werden, den Prozessor veranlassen, eine Vorrichtung zur additiven Fertigung zu steuern, einen Basketball (20) nach einem der vorhergehenden Ansprüche herzustellen.

14. Verfahren zum Herstellen eines Basketballs (20) nach einem der Ansprüche 1 bis 12, das Verfahren umfassend:
Erlangen einer elektronischen Datei, die eine Geometrie des Basketballs (20) darstellt; und
Steuern einer Vorrichtung zur additiven Fertigung zum Herstellen, in einem oder mehreren additiven Fertigungsschritten, des Basketballs (20) gemäß der in der elektronischen Datei spezifizierten Geometrie.

## Revendications

1. Ballon de basket (20) comprenant :
un corps unitaire unique formé d'un seul tenant (40) comprenant :
une première nappe (52) comprenant un treillis interne (42),
une deuxième nappe (54) comprenant un treillis externe (44) et des bandelettes de surface (24, 26, 28, 30), et
des poutres radiales (46) reliant la première nappe (52) et la deuxième nappe (54), dans lequel les poutres radiales (46) comprennent un premier nombre des poutres radiales (482) reliant la première nappe (52) et la deuxième nappe (54) sous les bandelettes de surface (24, 26, 28, 30) et un deuxième nombre des poutre radiales reliant la première nappe et la deuxième nappe circonférentiellement (484) entre les bandelettes de surface (24, 26, 28, 30) et dans lequel chacune du premier nombre de poutres radiales (482) a une première hauteur et dans lequel chacune du deuxième nombre de poutres radiales (484) a une deuxième hauteur supérieure à la première hauteur.

2. Ballon de basket (20) selon la revendication 1, dans lequel le treillis externe (44) est lobulaire avec une pluralité de lobes (36) reliées le long des bandelettes de surface (24, 26, 28, 30), et/ou
dans lequel le treillis interne (42) est sphérique et non-lobulaire, ou dans lequel le treillis interne (42) est lobulaire.

3. Ballon de basket (20) selon la revendication 1 ou 2, dans lequel chacune du premier nombre de poutres radiales (482) a une première épaisseur et dans lequel chacune du deuxième nombre de poutres radiales (484) a une deuxième épaisseur inférieure à la première épaisseur, optionnellement dans lequel les poutres radiales comprennent un troisième nombre des poutres radiales (486) reliant la première nappe (52) et la deuxième nappe (54) dans des régions circonférentielles entre les bandelettes de surface (24, 26, 28, 30), chacune du troisième nombre de poutres radiales (486) ayant la deuxième hauteur et une troisième épaisseur supérieure à la deuxième épaisseur.

4. Ballon de basket (20) selon l'une quelconque des revendications précédentes, dans lequel les poutres radiales (46) comprennent un premier nombre des poutres radiales (482) reliant la première nappe (52) et la deuxième nappe (54) vers l'intérieur des bandelettes de surface (24, 26, 28, 30) et un deuxième nombre des poutres radiales (484) reliant la première nappe (52) et la deuxième nappe (54) dans la direction circonférentielle entre les bandelettes de surface (24, 26, 28, 30), et dans lequel chacune du premier nombre de poutres radiales (482) a une première épaisseur et dans lequel chacune du deuxième nombre de poutres radiales (484) a une deuxième épaisseur inférieure à la première épaisseur.

5. Ballon de basket (20) selon l'une quelconque des revendications précédentes, dans lequel le treillis externe (44) comprend des poutres de treillis externe (68) ayant des surfaces extérieures plates, et/ou dans lequel le treillis externe (44) comprend une surface texturée extérieure.

6. Ballon de basket (20) selon l'une quelconque des revendications précédentes, dans lequel les poutres radiales (46) ont une épaisseur uniforme entre le treillis interne (42) et le treillis externe (44).

7. Ballon de basket (20) selon l'une quelconque des revendications précédentes, dans lequel le treillis interne (42) et le treillis externe (44) comprennent chacun un treillis hexagonal à deux dimensions, et/ou dans lequel le treillis interne (42) et le treillis externe (44) comprennent des cellules (60, 62, 64) ayant une distance de centre à centre d'au moins 5 mm et égale ou inférieure à 12 mm.

8. Ballon de basket (20) selon l'une quelconque des revendications précédentes, dans lequel le treillis interne (42) comprend des poutres de treillis interne (66) ayant une épaisseur d'au moins 1 mm et inférieure ou égale à 5 mm et dans lequel le treillis externe (44) comprend des poutres de treillis externe (68) ayant une épaisseur d'au moins 0,8 mm et égale ou inférieure à 3,5 mm au.

9. Ballon de basket (20) selon l'une quelconque des revendications précédentes, dans lequel le corps unitaire unique formé d'un seul tenant (40) est constitué d'un matériau présentant des propriétés de matériau suivantes, mesurées dans l'état moulé par injection :
une densité de 0,9 g/cm³ et égale ou inférieure à 1,2 g/cm³, une dureté shore A d'au moins 80 et égale ou inférieure 92, un module de flexion d'au moins 80, un module de traction d'au moins 50, et un pourcentage d'allongement d'au moins 150 % et une résilience de rebond d'au moins 50 %, mesurés selon ASTM D7121 / DIN 53512 DIN 53516.

10. Ballon de basket (20) selon l'une quelconque des revendications précédentes, comprenant en outre une peau extérieure sur une surface extérieure du treillis externe (44), optionnellement dans lequel la peau extérieure est non perforée, optionnellement dans lequel la peau extérieure est transparente ou translucide.

11. Ballon de basket (20) selon l'une quelconque des revendications précédentes, comprenant en outre une peau intérieure formée sur une surface intérieure d'un parmi le treillis interne (42) et le treillis externe (44).

12. Ballon de basket (20) selon l'une quelconque des revendications précédentes, dans lequel le ballon de basket (20) a une circonférence d'au moins 742 mm et égale ou inférieure à 759 mm au maximum, une masse d'au moins 567 g et égale ou inférieure à 628 g, et un rebond d'au moins 1320,8 mm (52 pouces) et égale ou inférieure à 1346,2 mm (53 pouces).

13. Programme informatique comprenant des instructions exécutables par un ordinateur qui, lorsqu'elles sont exécutées par un processeur, amènent le processeur à commander un appareil de fabrication additive pour fabriquer un ballon de basket (20) selon l'une quelconque des revendications précédentes.

14. Procédé de fabrication d'un ballon de basket (20) selon l'une quelconque des revendications 1 à 12, le procédé comprenant :
l'obtention d'un fichier électronique représentant une géométrie du ballon de basket (20), et
la commande d'un appareil de fabrication additive pour fabriquer, en une ou plusieurs étapes de fabrication additive, le ballon de basket (20) selon la géométrie spécifiée dans le fichier électronique.
